# EUROPEAN PATENT SPECIFICATION

(11) **EP 0 348 565 B1**
(45) Date of publication and mention of the grant of the patent: **22.03.1995**
(21) Application number: 88305916.4
(22) Date of filing: 29.06.1988
(51) Int. Cl.: C08L 51/00, C08F 265/06, C09D 11/10, C09G 1/16, C14C 11/00

(54) **Polymers comprising alkali-insoluble core/alkali-soluble shell and compositions thereof**
Polymerisate mit einem alkaliunlöslichen Kern und einer alkalilöslichen Schale und Zusammensetzungen damit
Polymères contenant un noyau insoluble dans les alcalis et une enveloppe soluble dans les alcalins et compositions à partir de ceux-ci

(43) Date of publication of application: 03.01.1990
(73) Proprietor: ROHM AND HAAS COMPANY, Philadelphia Pennsylvania 19105 (US)
(72) Inventor: Brown, Albert Benner, Warrington, PA 18976 (US); Gehlhaus, Paul Herbert, Warrington, PA 18976 (US); Lorah, Dennis Paul, Lansdale, PA 19446 (US); Harrop, William Henry, Elverson, PA 19520 (US); Lane, Constance Amelia, Rockport, ME 04856 (US); Madle, Thomas Glenn, Flourtown, PA 19031 (US); Stevens, Travis Edward, Ambler, PA 19002 (US); Tysak, Ted, Philadelphia, PA 19111 (US)
(74) Representative: Tanner, James Percival

(56) References cited:
- EP-A- 0 151 360
- EP-A- 0 207 854
- EP-A- 0 244 145
- US-A- 3 457 209
- US-A- 3 812 205
- CHEMICAL ABSTRACTS, vol. 102, no. 10, March 1985, page 10, abstract no. 79450c,Columbus, Ohio, US; && JP-A-59 154 133

## Description

This invention relates to polymer coatings, such as pigmented paints and clear overprint varnishes. It further relates to letdown vehicles used in aqueous flexographic inks and to partial or sole vehicles used in gravure and general ink formulations. Additionally it relates to polymer coatings for leather or leather substitutes, especially those applied to serve as an embossing release coat and a final topcoat, and to improved floor polishes and cement compositions.

In the field of paints and varnishes, as well as in the field of floor finishes and inks, mixtures or blends of alkali-soluble polymers with alkali-insoluble polymers have been utilized for many years. The alkali-soluble polymers are generally prepared by solution polymerization, although they can also be prepared by emulsion or dispersion polymerization techniques. U.S. Patent 3,037,952 is typical of this technology.

European Patent Application Publication No. 0207854 Al discloses a storage-stable coating composition containing core-shell polymer particles containing (A) 95-99% by weight of at least one C₁-C₈ alkyl acrylate or methacrylate and (B) 1-5% by weight of at least one water-soluble monomer.

While said prior art systems are quite useful and commercially successful, improvements in the area of water resistance, heat seal resistance, block resistance, rheology, stability and efficiency in preparation have been desired. The prior systems generally could not be prepared with more than about 35% by weight alkali-soluble polymer, whereas it has been desired to prepare up to 60% by weight alkali-soluble polymer.

In the printing ink field letdown vehicles have been used commercially in pigment dispersions for flexographic inks for some time. Such dispersions are usually prepared in emulsion and are high in styrene content. They are added to adjust viscosity, give the ink proper rheology, and aid in dry time, resistance properties, and film formation of the final dried ink formulation. The pigment dispersions generally comprise solvent- or emulsion-based resins of low molecular weight and high acid content. Many process and stability problems have been experienced with these dispersions which can be eliminated by the use of the core-shell polymers of the present invention.

Acrylic and modified-acrylic latex polymers containing copolymerized acid groups, often treated with zinc or other ions, are well known as components of floor polish vehicles. U.S. Patent Nos. 3,328,325 and 4,417,830 disclose such floor polishes containing acrylic polymers. The core-shell polymers of this invention are useful in the floor polish applications and exhibit better gloss performance than the acrylic-containing floor polishes known in the prior art.

US-A-3812205 discloses a process for preparing a heteropolymer latex particle. US-A-3812205 does not disclose any modification of the latex particle with alkali.

EP-A-0151360 and EP-A-0207854 disclose a core/shell particle wherein the core comprises at least 95% by weight of the particle.

US-A-3457209 discloses a core/shell particle wherein the core comprises at least 97% by weight of the particle and wherein the shell is totally made up of acid-containing monomer units.

In the field of leather embossing coatings, nitrocellulose lacquer emulsions have traditionally been used for many years. Although these lacquer systems are commercially useful, improvements in the areas of product stability, application rheology, gloss, fill, lower organic solvent content and non-flammability are desired. Water-based coatings containing the core-shell polymers of this invention give advantages in all these areas.

It is an object of the present invention to provide core-shell polymers and compositions thereof which exhibit good rheology and ease of application and which have improved stability, water resistance, heat-seal resistance, and are efficiently prepared by a process which permits levels of alkali-soluble polymer up to about 60% by weight. It is a further object to provide core-shell polymers which can be readily and inexpensively isolated from emulsion and utilized in improved cement formulations. It is also a further object of this invention to provide core-shell polymers and compositions thereof which are useful in various applications, such as inks, varnishes, paints, stains and other interior or exterior architectural coatings, leather coatings, cement compositions and floor polishes by virtue of their improved gloss, high temperature modulus, and other superior properties.

These objects, and others as will become apparent from the following description, are achieved by the present invention which comprises in part a composition comprising a core-shell polymer having alkali-insoluble, emulsion polymer core and an alkali-soluble, emulsion polymer shell physically or chemically attached or associated with said core so that, upon dissolving said shell with alkali, a small portion of said shell remains attached or associated with said core.

According to a first aspect of the present invention there is provided a process for preparing a polymer blend, the process comprising
adding alkali to an initial core-shell polymer particle having an alkali-insoluble, emulsion polymer core and an alkali-soluble, emulsion polymer shell attached to or associated with the core;
wherein the alkali neutralises and substantially, but not totally, dissolves the shell polymer such that a portion of the shell (i.e. less than 50%) remains attached to or associated with the core
thereby forming a blend of neutralised core-shell polymer and an aqueous solution of neutralised shell polymer;
wherein the weight ratio of core polymer to shell polymer is from 85:15 to 15:85;
wherein each of the core and shell is independently sequentially polymerized by emulsion polymerization from monomer systems comprising a monomer selected from methyl acrylate, ethyl acrylate, butyl acrylate, 2-ethylhexyl acrylate, decyl acrylate, methyl methacrylate, ethyl methacrylate, butyl methacrylate, hydroxethyl methacrylate, hydroxy propyl methacrylate, acrylonitrile, acrylic acid, methacrylic anhydride, maleic anhydride, itaconic anhydride, fumaric anhydride, stryene, substituted stryene, vinyl acetate, and other C₁ to C₁₂ alkyl or hydroxy alkyl acrylates and methacrylates;
wherein the core contains less than 10% by weight acid-containing unsaturated monomer units;
wherein the shell contains from 10 to 60% by weight of acid-containing unsaturated monomer units; and
wherein from 0.8 to 1.5 equivalents of alkali per equivalent of acid in the shell polymer are added.

According to a second aspect of the present invention there is provided a polymer blend of alkali soluble polymer and alkali insoluble polymer wherein the alkali soluble polymer and the alkali insoluble polymer are derived from the same initial polymer particle
wherein the blend is obtainable by a process comprising adding alkali to an initial core-shell polymer particle having an alkali-insoluble, emulsion polymer core and an alkali-soluble, emulsion polymer shell attached to or associated with the core; wherein the alkali neutralises and substantially, but not totally, dissolves the shell polymer such that a portion (i.e. less than 50%) of the shell remains attached to or associated with the core thereby forming a blend of neutralised core-shell polymer and an aqueous solution of neutralised shell polymer;
wherein the weight ratio of core polymer to shell polymer is from 85:15 to 15:85;
wherein each of the core and shell is independently sequentially polymerized by emulsion polymerization from monomer systems comprising a monomer selected from methyl acrylate, ethyl acrylate, butyl acrylate, 2-ethylhexyl acrylate, decyl acrylate, methyl methacrylate, ethyl methacrylate, butyl methacrylate, hydroxethyl methacrylate, hydroxy propyl methacrylate, acrylonitrile, acrylic acid, methacrylic anhydride, maleic anhydride, itaconic anhydride, fumaric anhydride, stryene, substituted stryene, vinyl acetate, and other C₁ to C₁₂ alkyl or hydroxy alkyl acrylates and methacrylates;
wherein the initial core is derived from less than 10% by weight acid-containing unsaturated monomer units;
wherein the initial shell is derived from 10 to 60% by weight of acid-containing unsaturated monomer units; and
wherein from 0.8 to 1.5 equivalents of alkali per equivalent of acid in the initial shell polymer are added.

This invention relates to novel core-shell polymers and compositions thereof which are useful in paints, overprint varnishes, stains, inks, leather coatings, cements, and floor polishes. The core-shell polymers have an alkali-insoluble, emulsion polymer core and an alkali-soluble, emulsion polymer shell which shell is either physically attached or associated with or chemically grafted to said core so that, upon dissolving said shell with alkali, a portion of said shell remains attached to, associated with, or grafted to said core. The core-shell polymers have a weight ratio of core polymer to shell polymer from 85:15 to 15:85. The polymers are polymerized from monomer systems comprised of monomers selected from methyl acrylate, ethyl acrylate, butyl acrylate, 2-ethylhexyl acrylate, decyl acrylate, methyl methacrylate, ethyl methacrylate, butyl methacrylate, hydroxy ethyl methacrylate, hydroxy propyl methacrylate styrene and substituted styrene, acrylonitrile, acrylic acid, methacrylic acid, itaconic acid, maleic acid, fumaric acid, vinyl acetate and other C₁-C₁₂ alkyl or hydroxy alkyl acrylates methacrylates. Preferably, the core and shell components are chemically grafted together by carrying out the emulsion polymerization of either the core or shell in the presence of at least one polyfunctional compound having 1) two or more sites of unsaturation, 2) two or more abstractable atoms, or 3) a combination of one or more sites of unsaturation and one or more abstractable atoms.

In another aspect the invention comprises a composition wherein said shell polymer has been neutralized and substantially, but not totally, dissolved so as to form a blend of neutralized core-shell polymer and an aqueous solution of neutralized shell polymer. The invention is also the process for making said compositions.

The unique polymer compositions of this invention (referred to herein by the acronym SSP, standing for soluble shell polymer) have improved performance and stability over prior art blends; one particular use is in clear overprint varnishes which exhibit high gloss, water resistance, high temperature and heat-seal resistance in films, and superior rheological properties to the prior art blends. The compositions are especially useful as coatings over fibrous substrates such as paper, paper board, and leather which have been previously printed with various types of inks. In one important application, where such coated paper is over-packaged with cellophane which requires a heat seal operation, it is especially important that the coating be heat seal resistant.

The compositions of this invention comprise a core-shell polymer having an alkali-insoluble emulsion polymer core and an alkali-soluble emulsion polymer shell physically attached or associated with or chemically grafted to said core, so that upon dissolving such shell with alkali a portion of said shell remains attached or associated with said core. The core-shell polymers of this invention are prepared by aqueous emulsion polymerization. Where the core and shell components are physically attached, the core particles are usually prepared first, followed by emulsion polymerization of the shell monomers in the presence of the core particles. It is also possible to prepare these particles by emulsion polymerizing the shell first, followed by emulsion polymerization of the core monomers in the presence of the shell particles. Where the core and shell components are chemically grafted together, the core-shell polymers are prepared by one of three techniques using polyfunctional compounds, which techniques and polyfunctional compounds will be discussed later.

Suitable monomers for the core and shell polymers are methyl acrylate, ethyl acrylate, butyl acrylate, 2-ethylhexyl acrylate, decyl acrylate, methyl methacrylate, ethyl methacrylate, butyl methacrylate, hydroxyethyl methacrylate, hydroxy propyl methacrylate acrylic acid, methacrylic acid, itaconic acid, maleic acid, fumaric acid, acrylic anhydride, methacrylic anhydride, maleic anhydride, itaconic anhydride, fumaric anhydride, styrene, substitute styrene, acrylonitrile, vinyl acetate, other C₁ to C₁₂ alkyl or hydroxy alkyl acrylates and methacrylates and the like.

Preferably catalyst in the range of 0.05 to 1%, more preferably 0.05% to 0.35%, by weight is employed to obtain a relatively high molecular weight core polymer. It is preferred that a low level of acid-containing monomer or none be contained in the monomer mixture which is polymerized to become the core polymer. The core monomer system contains less than 10% by weight acid-containing unsaturated monomer and, in the case of methacrylic acid, preferably none or 0.01% to 1.5% and, in some embodiments, preferably 0.3% to 0.7% by weight. Other unsaturated acid monomers than methacrylic acid can also be used, for example acrylic acid, itaconic acid and maleic acid.

Preferably the molecular weight of the core polymer is higher than that of the shell polymer, and more preferably the core polymer has a molecular weight greater than about 8,000 weight average as determined by gel permeation chromatography; most preferably greater than 50,000.

The Tg of the core polymer is preferably -65°C to about 100°C and, when it is polymerized first, it is polymerized preferably to a particle size of about 60 to about 140 nm. Due to its relative hydrophobicity versus that of the shell polymer, the core polymer can also be polymerized second, and when it is polymerized second it becomes a domain within the particles of the alkali-soluble shell polymer. It is also possible to prepare the core polymer in two or more stages with varying compositions.

The weight ratio of core polymer to shell polymer ranges from about 85:15 to 15:85, preferably 65:35 to 35:65, and most preferably 60:40 to 40:60. The shell polymer preferably has a molecular weight of 5,000 to 100,000 weight average as determined by gel permeation chromatography, and has a Tg preferably of at least 100°C. The shell polymer is polymerized from a mixture of unsaturated monomers comprising 10% to 60% by weight acid-containing unsaturated monomer. The preferred acid-containing monomer is methacrylic acid, and the preferred amount thereof is 20% to 50% by weight. As mentioned for the core polymer, other unsaturated acid-containing monomers can also be used.

The other unsaturated monomers in the monomer mixture which polymerized to become the shell polymer are as mentioned above, but 40% to 90% by weight methyl methacrylate is preferred.

The compositions of this invention preferably comprise core-shell polymers wherein said core and shell have been chemically grafted together using polyfunctional compounds such that, upon dissolving the shell with alkali, a significant portion of the shell does not remain permanently grafted and attached to the core. It is this permanent attachment of the shell and core though chemical grafting which is believed to give the core-shell polymers of this invention their improved stability toward alcohols/solvents and other additives.

There are three related techniques for preparing the grafted core-shell polymers of this invention. They are:
1) emulsion polymerization of the alkali-insoluble core in the presence of the polyfunctional compound(s), followed by emulsion polymerization of the alkali-soluble shell; 2) emulsion polymerization of the core, addition and polymerization of the polyfunctional compound(s), followed by emulsion polymerization of the shell; and 3) emulsion polymerization of the shell in the presence of the polyfunctional compound(s), followed by emulsion polymerization of the core.

The polyfunctional compounds useful in chemically grafting the core and shell together are selected from a) polyfunctional compounds having two or more sites of unsaturation, b) reactive chain transfer agents having two or more abstractable atoms, and c) hybrid polyfunctional compounds having one or more sites of unsaturation and one or more abstractable atoms. Compounds such as the glycidyl-containing vinyl monomers and vinyl isocyanates and the like, described in U.S. Patent No. 4,565, 839, are not suitable as polyfunctional compounds for this invention because they do no work to graft the core to the shell in the aqueous-based emulsion polymerizations.

The preferred technique for making the improved core-shell polymers of this invention is Technique No. 1 above where the polyfunctional compound(s) is present during the emulsion polymerization of the core, followed by emulsion polymerization and grafting of the shell to the core. This technique can result in a core polymer which has been substantially crosslinked by the polyfunctional compound and which has greater stability toward alcohols, organic solvents and other additives. The polyfunctional compound(s) reacts with the core polymer to crosslink it and has reactive functionality remaining for grafting to the shell polymer.

Suitable monomers for the core following Technique No. 1 include all the common emulsion polymerizable monomers given above. Preferred monomers for the core include the C₁ to C₁₂ alkyl acrylates and methacrylates and styrene. The core may optionally contain common chain transfer agents such as C₁ to C₁₂ alkyl mercaptans or halogenated hydrocarbons at levels of about 0.1 to about 10% by weight. Levels of acid-containing monomers in the core range from 0 to about 10% by weight.

The polyfunctional compounds useful in Technique No. 1 should preferably be of the type commonly referred to as graft-linking monomers having two or more sites of unsaturation of unequal reactivity. Additionally, graft-linking monomers with readily abstractable atoms and functional chain transfer agents are also suitable for use in Technique No. 1. More preferably the polyfunctional compound(s) useful in Technique No. 1 are selected from the group consisting of allyl-, methallyl-, vinyl-, and crotyl-esters of acrylic, methacrylic, maleic (mono- and di-esters), fumaric (mono- and di-esters) and itaconic (mono- and di-esters) acids; allyl-, methallyl-, and crotyl-vinyl ether and thioether; N- and N, N-di-allyl-, crotyl-, methallyl-, and vinyl-amides of acrylic and methacrylic acid; N-allyl-, methallyl, and crotyl-maleimide; vinyl esters of 3-butenoic and 4-pentenoic acids; diallyl phthalate; triallyl cyanurate; O-allyl, methallyl-, crotyl-, O-alkyl-, aryl-, P-vinyl-, P-allyl-, P-crotyl, and P-methallyl phosphonates; triallyl-, trimethallyl, and tricrotyl- phosphates; O,O-diallyl-, dimethallyl-, and dicrotyl-phosphates; cycloalkenyl esters of acrylic, methacrylic, maleic (mono- and di-esters), fumaric (mono- and di- esters), and itaconic (mono- and di-esters) acids; 1,3-butadiene, isoprene, and other conjugated dienes; para-methylstyrene; chloromethylstyrene; allyl-, methallyl-, vinyl-, and crotyl- mercaptan; bromotrichloromethane; bromoform; carbon tetrachloride; and carbon tetrabromide. Preferably the level of said polyfunctional compound(s) ranges from 0.1 to 30% by weight of the core, more preferably 1.0 to 10%. Most preferably the polyfunctional compound is allyl acrylate or allyl methacrylate.

Suitable monomers for use in preparing the shell Technique No. 1 include those listed above for the core. Higher levels of acid-containing monomers are used in the shell than in the core to induce alkali solubility. Levels of acid-containing monomer(s) for the shell range from 10 to 60% by weight, preferably 20 to 50% by weight of the total shell monomer. The most preferred acid-containing monomers for use in preparing the core polymer is methacrylic acid. Anhydrides, such as methacrylic anhydride, maleic anhydride, itaconic anhydride and the like, may be used in place of the acid-containing monomers in the shell polymer. Preferably the shell polymer comprises 40 to 90% by weight methyl methacrylate. The shell polymer preferably has a weight average molecular weight of about 5,000 to about 100,000 as determined by gel permeation chromatography. Common chain transfer agents or mixtures thereof known in the art, such as alkyl-mercaptans, are employed to control molecular weight.

This emulsion polymerization of the core and shell polymer can basically be carried out by processes which are well known in the art. Processes for emulsion polymerization are described in U.S. Patent No. 4,443,585. By emulsion polymerizing the core and shell polymers in aqueous medium, advantages such as safety, efficiency, and better particle size control are obtained over solvent-based solution polymerization processes.

Technique No. 2 for preparing the core-shell polymers of this invention involves addition of the polyfunctional compound(s) to the preformed core polymer emulsion. The core polymer is first emulsion-polymerized using monomers and concentrations described above for Technique No. 1. After the core polymer emulsion has been prepared, the polyfunctional compound(s) is added, allowed to soak into the core polymer for 10 to 60 minutes, and polymerized using a redox initiator such as t-butyl hydroperoxide/sodium sulfoxylate formaldehyde/ferrous sulfate. Subsequently the shell polymer is emulsion polymerized in the presence of the core and chemically grafted thereto. Monomers and concentrations suitable for preparing the shell polymer following Technique No. 2 are the same as those described above for Technique No. 1.

Polyfunctional compounds suitable for use following Technique No. 2 are selected from the group consisting of allyl-, methallyl-, vinyl-, and crotyl-esters of acrylic, methacrylic, maleic (mono- and di-esters), fumaric (mono- and di-esters), and itaconic (mono- and di-esters) acids; allyl-, methallyl-, and crotyl-vinyl ether and thioether; N- and N, N-di-allyl-, crotyl-, methallyl-, and vinylamides of acrylic and methacrylic acid; N-allyl-, methallyl-, and crotyl-maleimide; vinyl esters of 3-butenoic and 4-pentenoic acids; diallyl phthalate; triallyl cyanurate; O-allyl, methallyl-, crotyl-, O-alkyl-, aryl-, P-vinyl-, P-allyl, P-crotyl-, and P-methallyl-phosphonates; triallyl-, trimethallyl-, and tricrotyl-phosphates; cycloalkenyl esters of acrylic, methacrylic, maleic (mono- and di-esters), fumaric (mono- and di-esters), and itaconic (mono- and di-esters) acids; vinyl ethers and thioethers of cycloalkenols and cycloalkene thiols; vinyl esters of cycloalkene carboxylic acids; and 1,3-butadiene, isoprene, and other conjugated dienes. In addition, compounds of the type commonly described as crosslinking polyunsaturated monomers having two or more sites of unsaturation of approximately equal reactivity can be used, such as, for example ethyleneglycol dimethacrylate, diethyleneglycol dimethacrylate, triethyleneglycol dimethacrylate, polyethylene glycol dimethacrylate, polypropyleneglycol dimethacrylate, neopentylglycol dimethacrylate, 1,3-butleneglyol diacrylate, neopentylglycol diacrylate, trimethylolethane trimethacrylate, dipentaerythritol triacrylate, dipentaerythritol tetracrylate, dipentaethritol pentaacrylate, 1,3-butylene glycol dimethacrylate, trimethylolpropane trimethacrylate, trimethylol propane triacrylate, tripropylene glycol diacrylate, and divinyl benzene.

The level of polyfunctional compound(s) useful in Technique No. 2 ranges from 5 to 30%, expressed as weight percent of the core polymer, preferably 10 to 20%. Monofunctional monomers may also be added with the polyfunctional compound up to a level of 70% by weight of the total monomers and polyfunctional compounds added to the preformed core emulsion.

Technique No. 3 involves firstly emulsion polymerization of the shell polymer in the presence of the polyfunctional compound(s), followed by emulsion polymerization of the core polymer and grafting of the core to the shell. This technique differs from Technique No.'s 1 and 2 in that the shell polymer is polymerized first and the graft site is incorporated into the shell polymer. Because of the hydrophylic nature of the shell polymer, it migrates to the particle surface to be at the hydrophylic polymer/water interface. Thus, Technique No. 3 also produces polymers having an alkali-insoluble core and an alkali-soluble shell.

Suitable monomers and concentrations thereof for the shell polymer and core polymer following Technique No. 3 are the same as described for Technique No.1 above. Likewise, suitable polyfunctional compounds are the same as described for Technique No. 1.

Preferred polyfunctional compounds for use in Technique No. 3 include methallyl-, crotyl- and vinylesters of acrylic acid, methacrylic acid, maleic acid (mono- and di- esters), fumaric acid (mono- and di-esters) and itaconic acid (mono- and di- esters); allyl-, methallyl- and crotyl- vinyl ether; N- or N,N-di, methallyl, crotyl- and vinyl- amides of acrylic acid and methacrylic acid; N- methallyl and crotyl- maleimide; cycloalkenyl esters of acrylic acid, methacrylic acid, maleic acid (mono- and di- esters), fumaric acid (mono- and diesters), fumaric acid (mono- and di- esters), itaconic acid (mono- and di- esters); 1,3-butadiene; isoprene; para-methylstyrene; chloromethylstyrene; methallyl-, crotyl- and vinyl- mercaptan; and bromotrichloromethane.

The most preferred polyfunctional compounds for use in Technique No. 3 include crotyl esters of acrylic and methacrylic acid, para-methylstyrene, crotyl mercaptan and bromotrichloromethane.

Following Technique 3, the polyfunctional compound(s) is used at a level of 2 to 30% by weight of the shell polymer, preferably 3 to 10%.

Based on equivalents of acid in the shell polymer, preferably 0.8 to 1.5 equivalents of base are introduced to the composition of this invention to neutralize and substantially, but not totally, dissolve the shell polymer so as to form a blend of neutralized core-shell polymer and an aqueous solution of neutralized shell polymer. We have found that our method leaves some of the shell polymer still closely associated with, or attached to, the core. Most of the neutralized shell polymer is dissolved in the aqueous medium but some remains attached to the core in what is believed to be the form of cilia or hair-like protrusions.

The base can be any, but is preferably selected from the group consisting of ammonia, triethylamine, monoethanolamine, dimethylaminoethanol, sodium hydroxide and potassium hydroxide.

The core-shell polymers of this invention are useful in a variety of applications. The resultant compositions are useful as a clear overprint varnish. Other uses include binders for paints, stains and other pigmented architectural coatings, letdown vehicles for flexographic inks, partial or sole vehicles for gravure and general-purpose inks, coatings for leather embossing, vehicles for floor polishes, additives for cement, and as a seed for further emulsion polymerization.

In paint formulations, the core-shell polymers of this invention can be used at levels based on weight of solids ranging from 5% to 40%, preferably 15% to 30%, of the total weight of the paint formulations. These core-shell polymers result in improved block resistance, gloss and open-time of the paints.

The paint formulations within which the core-shell polymers of this invention are useful may include conventional additives such as pigments, fillers, dispersants, wetting agents, coalescents, rheology modifiers, drying retarders, biocides and anti-foaming agents.

The core-shell polymers are particularly useful as modifiers for cement mortars either as an emulsion or dry powder. The polymers are easily isolatable by conventional methods, such as spray drying, to yield dry free flowing powders, which upon admixture with cement mortars provide superior performance characteristics.

In ink applications, the neutralized core-shell polymers are useful as a letdown vehicle. The polymers are beneficial for rheology, drink (ability to be diluted without loss of viscosity) and stability (especially stability toward alcohols) for a wide variety of inks, particularly aqueous flexographic printing inks. The preferred core-shell polymers for use in flexographic inks are those containing styrene in the core and butadiene as the polyfunctional compound since these polymers give improved balance of block resistance and anti-skid properties.

The core-shell polymers of this invention can be formulated and applied to leather or leather substitutes by spray or roll coating to serve as an embossing release coat or a final topcoat or finish. The unique compositional features of the core-shell polymers produce films that possess a high temperature modulus needed for the embossing process.The core-shell polymers can be blended with other multistage acrylic emulsions to obtain desirable properties such as improved flex and adhesion without loss of embossing properties.

Preferably, the polyfunctional compound is allyl acrylate or allyl methacrylate and comprises 1 to 10% by weight of said core.

Preferably, the polyfunctional compound is butadiene or isoprene and is present at a level of from 1.0 to 100% by weight of said core.

In summary, therefore the core-shell polymers of the invention comprise a substantially alkali-insoluble core polymer and a shell polymer, comprising alkali-soluble polymer, having a weight average molecular weight less than said core polymer, said core polymer and said second polymer having been prepared by emulsion polymerising first and second monomer systems, respectively, comprising one or more monomers of (C₁-C₁₂) alkyl acrylate, (C₁-C₁₂) alkyl methacrylate, acrylonitrile, vinyl acetate, styrene, substituted styrene, acrylic acid, methacrylic acid, itaconic acid, butenedioic acid, acrylic anhydride, methacrylic anhydride, itaconic anhydride and butenedioic anhydride, and wherein the weight ratio of said core polymer to said shell polymer in said core-shell polymer (before being neutralized, if applicable) is 85:15 to 15:85, preferably 80:20 to 20:80. It is preferred that the weight average molecular weight of said shell polymer is 5,000 to 50,000 and/or the weight average molecular weight of said core polymer is greater than 50,000 and/or that the T_{g} of said core polymer is -20°C to 30°C and/or the T_{g} of said shell polymer is at least 100°C.

In these core-shell polymers the second monomer system preferably comprises 20 to 50% methacrylic acid.

In a preferred embodiment of the present invention the first monomer system comprises 0 or up to 3% by weight acid-containing monomer, preferably 0.01 to 1.5% methacrylic acid and more preferably 0.3 to 0.7% methacrylic acid.

In the core-shell polymer of the invention (before being neutralized, if applicable) the weight ratio of said core polymer to said shell polymer is preferably 65:35 to 35:65, more preferably 60:40 to about 40:60.

In another aspect, the present invention comprises a polymeric residue formed by at least partially neutralizing with base said core-shell polymer as described in any one of the preceding paragraphs, wherein said residue comprises core polymer having attached thereto, or associated therewith, remnants of shell polymer.

In yet another aspect, the present invention comprises a method of making a core-shell polymer comprising a substantially alkali-insoluble core polymer and a shell polymer, comprising alkali-soluble polymer, having a weight average molecular weight less than said core polymer, said method comprising
either
(a) emulsion polymerising a first monomer system to form said core polymer, then emulsion polymerising, in the presence of said core polymer, a second monomer system to form said shell polymer;
or
(b) emulsion polymerising a second monomer system to form said shell polymer, then emulsion polymerising, in the presence of said shell polymer, a first monomer system to form said core polymer;
   wherein said first monomer system and said second monomer system comprises one or more monomers of (C₁-C₁₂) alkali acrylate, (C₁-C₁₂) alkyl methacrylate, acrylonitrile vinylacetate, styrene, substituted styrene, acrylic acid, methacrylic acid, itaconic acid, butenedioic acid, acrylic anhydride, methacrylic anhydride, itaconic anhydride and butenedioic anhydride; and
   wherein after completion of (a) or (b) above and before any other subsequent method step (if any) the weight ratio of said core polymer to said shell polymer is 80:20 to 20:80. The core-shell polymer formed after completion of (a) or (b) above is preferably subsequently at least partially neutralized with base, such as with 0.8 to 1.5 equivalents of base per equivalent of acid in the shell polymer. A preferred base is one or more of ammonia, monoethanolamine, dimethylaminoethanol, sodium hydroxide and potassium hydroxide.

In yet another aspect, the present invention comprises the use of a core-shell polymer as described above, a polymeric residue as described above, or a core-shell polymer made by a method as described above, in an ink composition, a coating composition, a floor polish composition or a concrete composition.

In yet another aspect, the present invention comprises a core-shell polymer comprising a substantially alkali-insoluble core polymer chemically grafted to a shell polymer, comprising alkali-soluble polymer, said core polymer and said shell polymer having been prepared sequentially by emulsion polymerisation. Preferably, the weight average molecular weight of said core polymer is at least 8000 and/or the weight average molecular weight of said shell polymer is 5000 to 100000, and/or the weight ratio of the core polymer to the shell polymer (before being neutralised, if applicable) is 85:15 to 15:85, preferably 70:30 to 30:70, and most preferably 60:40 to 40:60. The core polymer and the shell polymer are preferably each polymerised from a first monomer system and a second monomer system, respectively, comprising one or more monomers of (C₁-C₁₂) alkyl-acrylate, (C₁-C₁₂)-alkyl methacrylate, acrylonitrile, vinyl acetate, styrene, substituted styrene, acrylic acid, methacrylic acid, itaconic acid, butenedioic acid, acrylic anhydride, methacrylic anhydride, itaconic anhydride and butenedioic anhydride. The core polymer is polymerized from a first monomer system comprising 0 or up to 10%, preferably 0.5 to 5%, by weight acid-containing unsaturated monomer and/or the shell polymer is polymerized from a second monomer system comprising 10 to 60% by weight acid-containing unsaturated monomer, preferably 20 to about 50% by weight methacrylic acid. The shell is preferably polymerized from a second monomer system comprising 40 to about 90% by weight methyl methacrylate. In the core-shell polymer, the glass transition temperature of the core polymer is preferably -65°C to 100°C and/or the glass transition temperature of the shell polymer is preferably at least 100°C.

In another aspect, the present invention comprises a polymeric residue formed by at least partially neutralizing with base the core-shell polymer described in the previous paragraph. The residue comprises core polymer having grafted thereto remnents of shell polymer.

In yet another aspect, the present invention comprises a method of making a core-shell polymer comprising a substantially alkali-insoluble core polymer chemically grafted, using polyfunctional compound, to a shell polymer comprising alkali-soluble polymer, said method comprising sequentially emulsion polymerising a first monomer system and a second monomer system, to form said core polymer and said shell polymer respectively. In a preferred method, the polyfunctional compound(s) is one or more of
a) polyfunctional compounds having two or more sites of unsaturation,
b) reactive chain transfer agents having two or more abstractable atoms, and
c) hybrid polyfunctional compounds having one or more abstractable atoms and one or more sites of unsaturation. The method may preferably comprise (a) emulsion polymerising the first monomer system in the presence of the polyfunctional compound(s), followed by emulsion polymerising the second monomer system, in which case it is preferred that the polyfunctional compound(s) has at least two sites of unsaturation of unequal reactivity and/or is present at a level of from 0.1 to 30% by weight of the core polymer, preferably 1.0 to 10% by weight of the core; or (b) emulsion polymerising the first monomer system alone, addition and polymerisation of the polyfunctional compound(s), followed by emulsion polymerising of the second monomer system, in which case it is preferred that the polyfunctional compound is present at a level of 5 to 30% by weight of said core polymer, preferably 10 to 20% by weight of said core polymer; or (c) emulsion polymerising the second monomer system in the presence of the polyfunctional compound(s), followed by emulsion polymerising the first monomer system, in which case it is preferred that the polyfunctional compound(s) is present at a level of from 2 to 30% by weight of the shell polymer, preferably 3 to about 10% by weight of the shell polymer.

If (a) or (c) is selected, the polyfunctional compound(s) is preferably one or more of allyl-, methallyl-, vinyl-, and crotyl-esters of acrylic, methacrylic, maleic (mono-and di-esters), fumaric (mono- and di-esters) and itaconic (mono- and di-esters) acids; allyl-, methallyl-, and crotyl-vinyl ether and thioether; N- and N,N-di-allyl-, methallyl-, crotyl-, and vinyl- amides of acrylic acid and methacrylic acid; N-allyl-, methallyl-, and crotyl-maleimide; vinyl esters of 3-butenoic and 4-pentenoic acids; diallyl phthalate; triallyl cyanurate; O-allyl-, methallyl-, crotyl-, O-alkyl-, aryl-, P-vinyl-, P-allyl-, P-crotyl-, and P-methallyl-phosphonates; triallyl-, trimethallyl-, and tricrotyl-phosphates; O-vinyl-, O,O-diallyl-, dimethallyl-, and dicrotyl-phosphates; cycloalkenyl esters of acrylic, methacrylic, maleic (mono- and di-esters), fumaric (mono- and di-esters), and itaconic (mono- and di-esters) acids; vinyl ethers and thioethers of cycloalkenols and cycloalkene thiols; vinyl esters of cycloalkene carboxylic acids; 1,3-butadiene, isoprene, and other conjugated dienes; para-methyl styrene; chloromethylstyrene; allyl-, methallyl-, vinyl-, and crotyl-mercaptan; bromotrichloromethane; bromoform; carbon tetrachloride; and carbon tetrabromide. If (b) is selected, the polyfunctional compound(s) is preferably one or more or allyl-, methallyl-, vinyl-, and crotyl-esters of acrylic, methacrylic, maleic (mono-and di-esters), fumaric (mono- and di-esters) and itaconic (mono- and di-esters) acids; allyl-, methallyl-, and crotyl-vinyl ether and thioether; N- and N,N-di-allyl-, methallyl-, crotyl-, and vinyl- amides of acrylic acid and methacrylic acid; N-allyl-, methallyl-, and crotyl-maleimide; vinyl esters of 3-butenoic and 4-pentenoic acids; diallyl phthalate; triallyl cyanurate; O-allyl-, methallyl-, crotyl-, O-alkyl, aryl-, P-vinyl-, P-allyl-, P-crotyl-, and P-methallyl-phosphonates; triallyl-, trimethallyl-, and tricrotyl-phosphates; P»vinyl-, O,O-diallyl-, dimethallyl-, and dicrotyl-phosphates; cycloalkenyl esters of acrylic, methacrylic, maleic (mono- and di-esters), fumaric (mono- and di-esters), and itaconic (mono- and di-esters) acids; vinyl ethers and thioethers of cycloalkenols and cycloalkene thiols; vinyl esters of cycloalkene carboxylic acids; 1,3-butadiene, isoprene and the other conjugated dienes; ethyleneglycol dimethacrylate, diethyleneglycol dimethacrylate, triethyleneglycol dimethacrylate, polethylene glycol dimethacrylate, polypropyleneglycol dimetharylate, meopentylglycol dimethacrylate, 1,3-butyleneglycol diacrylate, neopentylglycol diacrylate, trimethylolethane trimethacrylate, dipentaerythritol triacrylate, dipentaerythritol tetraacrylate, dipentaerythritol pentaacrylate, 1,3-butylene glycol dimethacrylate, trimethylolpropane trimethacrylate, trimethylol propane triacrylate, tripropylene glycol diacrylate, and divinyl benzene. The core-shell polymer is preferably subsequently at least partially neutralised with base.

In yet another aspect, the present invention comprises use of a core-shell polymer as described three paragraphs above, a polymeric residue as described two paragraphs above, or a core-shell polymer made by a method as described in the previous paragraph in an ink composition; a coating composition e.g. a clear overprint varnish, a leather composition and a floor polish composition; or a cement composition, and in yet another aspect, the present invention comprises a process for emulsion polymerization using the core-shell polymer as described three paragraphs above as a seed.

Preferably, the polyfunctional compound is present during the emulsion polymerization of said core, followed by emulsion polymerization and grafting of said shell to said core, and preferably said polyfunctional compound is selected from the group consisting of allyl-, methallyl-, vinyl-, and crotyl-esters of acrylic, methacrylic, maleic (mono- and di-esters), fumaric (mono- and di-esters) and itaconic (mono- and diesters) acids; allyl-, methallyl-, and crotyl-vinyl ether and thioether; N- and N,N-di-allyl-, methallyl-, crotyl-, and vinyl- amides of acrylic acid and methacrylic acid; N-allyl-, methallyl-, and crotyl-maleimide; vinyl esters of 3-butenoic and 4-penteroic acids; diallyl phthalate; triallyl cyanurate; O-allyl-, methallyl-, crotyl-, 0-alky-, aryl-, P-vinyl-, P-allyl-, P-crotyl-, and P-methallyl-phosphonates; triallyl-, trimethallyl-, and tricrotyl-phosphates; O-vinyl-,O,O-diallyl-, dimethallyl-, and dicrotyl-phosphates; cycloalkenyl esters of acrylic, methacrylic, maleic (mono- and diesters), fumaric (mono- and di-esters), and itaconic (mono- and di-esters) acids; vinyl ethers and thioethers of cycloalkenols and cycloalkene thiols; vinyl esters of cycloalkere carboxylic acids; 1,3-butadiene, isoprene, and other conjugated dienes; para-methyl styrene; chloromethylstyrene; allyl-, methallyl-, vinyl-, and crotyl-mercaptan; bromotrichloromethane; bromoform; carbon tetrachloride; and/or in carbon tetrabromide.

In order to further illustrate the invention the following examples, in which all parts and percentages are by weight unless otherwise indicated, are presented. However it should be understood that the invention is not limited to these illustrative examples.

The examples demonstrate the beneficial properties of the core-shell polymers of this invention, and particularly show that the grafted core-shell polymers of this invention have greater alcohol stability than polymers of the prior art. The degree of alcohol stability that results depends on 1) the specific composition of the core-shell polymer, 2) the solids content of the polymer emulsion, 3) the type and level of polyfunctional compound used, and 4) the synthesis technique used (i.e. Technique No.'s 1, 2 or 3). As used in the examples, enhanced alcohol stability means no coagulum formed when mixing the polymer composition with isopropyl alcohol, and excellent alcohol stability means in addition that there is no significant increase in viscosity and particle size after heat aging with isopropyl alcohol for 10 days at 60°C.

### EXAMPLES

### Example 1 - Preparation of Core-Shell Polymer

A stirred reactor containing 845 grams deionized water (D.I.) and 2.7 grams of sodium lauryl sulfate was heated to 82°C. After addition of 2.25 grams ammonium persulfate, the two monomer emulsions ("M.E.") listed in the table below were slowly added sequentially at 82°C over a period of 90 minutes each, with a 30 minute hold between the two stages to assure about 97% conversion of the first stage monomers. A solution of 1.35 grams ammonium persulfate in 125 grams water was added simultaneously with the first stage monomers, and a solution of 1.8 grams ammonium persulfate in 125 grams water was added with the second stage monomers. Residual mercaptan was oxidized with 30 grams of 10% hydrogen peroxide.

The core monomer system contained 1.5% acid-containing monomer and the shell monomer system contained 20% acid-containing monomer.

The ratio of core polymer to shell polymer was 50:50.

| | M.E. #1 (core) | M.E. #2 (shell) |
|---|---|---|
| D.I. Water | 300 | 300 |
| Sodium Lauryl Sulfate | 9.0 | 6.3 |
| Butyl Acrylate (BA) | 585 | - |
| Methyl Methacrylate (MMA) | 301.5 | 720 |
| Methacrylic Acid (MAA) | 13.5 | 180 |
| Methyl 3-Mercaptoproprionate (MMP) | - | 27 |
| Water, rinse | 100 | 100 |
| Final % Solids | 39.8% | 47.3% |
| pH | - | 2.2 |
| Particle Size, nm | 82 | 108 |
| Molecular weight, Mw (GPC) | 71.0 x 10⁶ | 10,000 |

### Example 2

### Neutralization of Shell Polymer

After dilution of the core-shell polymer from Example 1 to about 35% solids, it was neutralized to a pH about 8-8.5 with aqueous ammonia. On heat aging the neutralized latex for ten days at 60°C(140°F), there was little or no change in particle size or performance as a clear, overprint varnish. Films exhibited excellent gloss on porous substrates and a reasonable degree of heat seal resistance (125°C), and water resistance.

### Example 3

### Preparation of Core-Shell Polymers Having Varying Compositions

Using the process of Examples 1 and 2, the weight % shell polymer was varied from 30-60%, the acid content of the shell polymer was varied from 10-40%, the acid content of the core polymer was varied from 0-1.5%, and the molecular weight of the shell polymer was varied from 8,000 to about 50,000 with hydrophylic chain transfer agents (CTA's) such as the methyl ester of 3-mercaptopropionic acid, or hydrophobic CTA's, such as lauryl mercaptan.

### Example 4

### Preparation of Shell Polymer and Neutralizing Shell at Elevated Temperatures

A stirred reactor containing 676 grams deionized water, 2.16 grams sodium laryl sulfate and 3.6 grams sodium acetate trihydrate was heated to 81°C. After addition of 1.8 grams ammonium persulfate, the two monomer emulsions (M.E.) given in the table below were added sequentially at 82°C over a period of 90 minutes each, with a 30-minute hold between the stages. The cofeed catalyst solutions for stage one (core) was 1.08 grams ammonium persulfate in 100 grams water, and for stage two (shell) was 2.16 grams ammonium persulfate in 150 grams water.

After completion of the polymerization, the reaction was cooled at 45-50°C and diluted with 440 grams deionized water. A 15% solution of aqueous ammonia (205 grams) was then added over a period of 10 to 15 minutes.

After heat aging the latex at 60°C for ten days, the particle size of the dispersion was 106 nanometers and there was little change in the performance characteristics of film clarity, rheology index, and heat seal resistance as a clear, overprint varnish.

| | M.E. #1 (core) | M.E. #2 (shell) |
|---|---|---|
| D.I. Water | 240 | 240 |
| Sodium Lauryl Sulfate | 8.64 | 3.6 |
| Butyl Acrylate (BA) | 468 | - |
| Methyl Methacrylate (MMA) | 244.8 | 576 |
| Methacrylic Acid (MAA) | 7.2 | 144 |
| Methyl 3-Mercaptopropionate (MMP) | - | 21.6 |
| Water, rinse | 100 | 100 |
| Molecular weight, Mw (GPC) | >800,000 | 11,000 |
| Final Solids | 39.7 | 38.4 |
| pH | - | 8.3 |
| Particle Size, nm | 92 | 93 |
| Viscosity, 3/30, cps | - | 806 |

### Example 5

### Inverse Polymerization Procedure of Preparing Core-Shell Polymer

In this procedure the shell polymer was prepared first, followed by polymerization of the core polymer. With this procedure there was more efficient use of the chain transfer agent for controlling molecular weight of the shell polyemr.

A stirred reactor, containing 250 grams D.I. water, 9.0 grams sodium lauryl sulfate and 5.4 grams sodium acetate trihydrate, was heated to 82°C. After addition of 1.35 grams of ammonium persulfate, the two monomer emulsions (M.E.) listed below were added sequentially over a period of about 90 minutes each, with a hold of 30 minutes between the two stages.

| | M.E. #1 (shell) | M.E. #2 (core) |
|---|---|---|
| D.I. Water | 300 | 300 |
| Sodium Lauryl Sulfate | 4.5 | 9.0 |
| Methyl Methacrylate (MMA) | 720 | 315 |
| Methacrylic Acid (MAA) | 180 | - |
| Methyl 3-Mercaptopropionate (MMP) | 27 | - |
| Butyl Acrylate (BA) | - | 585 |
| D.I. Water, rinse | 100 | 100 |
| Ammonium Persulfate/D.I. Water | 2.25/100 | 1.8/125 |

### Example 6

### Preparation of Core-Shell Polymers Having Varying Compositions

Following the procedures of Example 5, core-shell polymers with the first stage (shell) composition varying from 65-80% MMA and 20-35% MAA were prepared with either lauryl mercaptan or the methyl ester of 3-mercaptopropionic acid as the chain transfer agent (CTA) for the first stage. Properties are summarized in the tables below. Very high levels of acid in the shell portion of the polymer tended to cause particle agregation, especially with hydrophilic CTA's. Particle size grow-out indicated no new particles were found on polymerization of the second state (confirmed by electron microscopy).

| Example | 6A | 6B | 6C | 6D |
|---|---|---|---|---|
| First Stage (Shell) | | | | |
| MMA/MAA Ratio | 65/35 | 70/30 | 75/25 | 80/20 |
| CTA | 3% MMP | 3% MMP | 3% MMP | 3% MMP |
| % Solids | 35% | 35% | 35% | 35% |
| Particle Size, nm | 158 | 104 | 79 | 86 |

| Final Core-Shell Polymer | | | | |
|---|---|---|---|---|
| % Solids | 43.4 | 43.4 | 43.4 | 43.3 |
| pH | 2.5 | 2.5 | 2.6 | 3.5 |
| Particle Size, nm | 196 | 128 | 107 | 102 |

**Table I**

| Effect of MAA Level in Shell on Glass Transition Temperature | |
|---|---|
| % MAA in Shell | Tg°C (Onset/Inflection) |
| 20 | 127/138 |
| 22 | 130/143 |
| 24 | 136/147 |
| 26 | 137/149 |
| 28 | 139/153 |
| 30 | 147/155 |

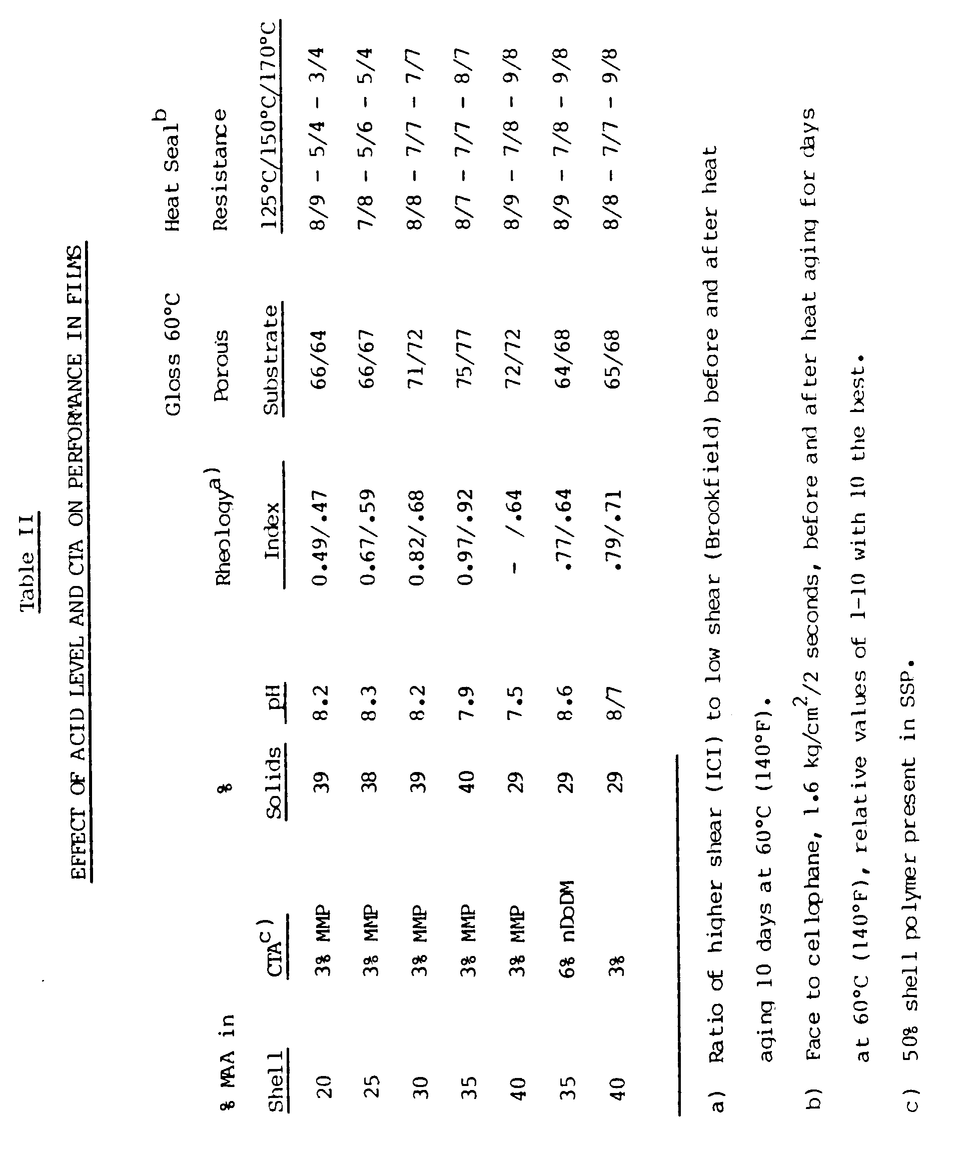

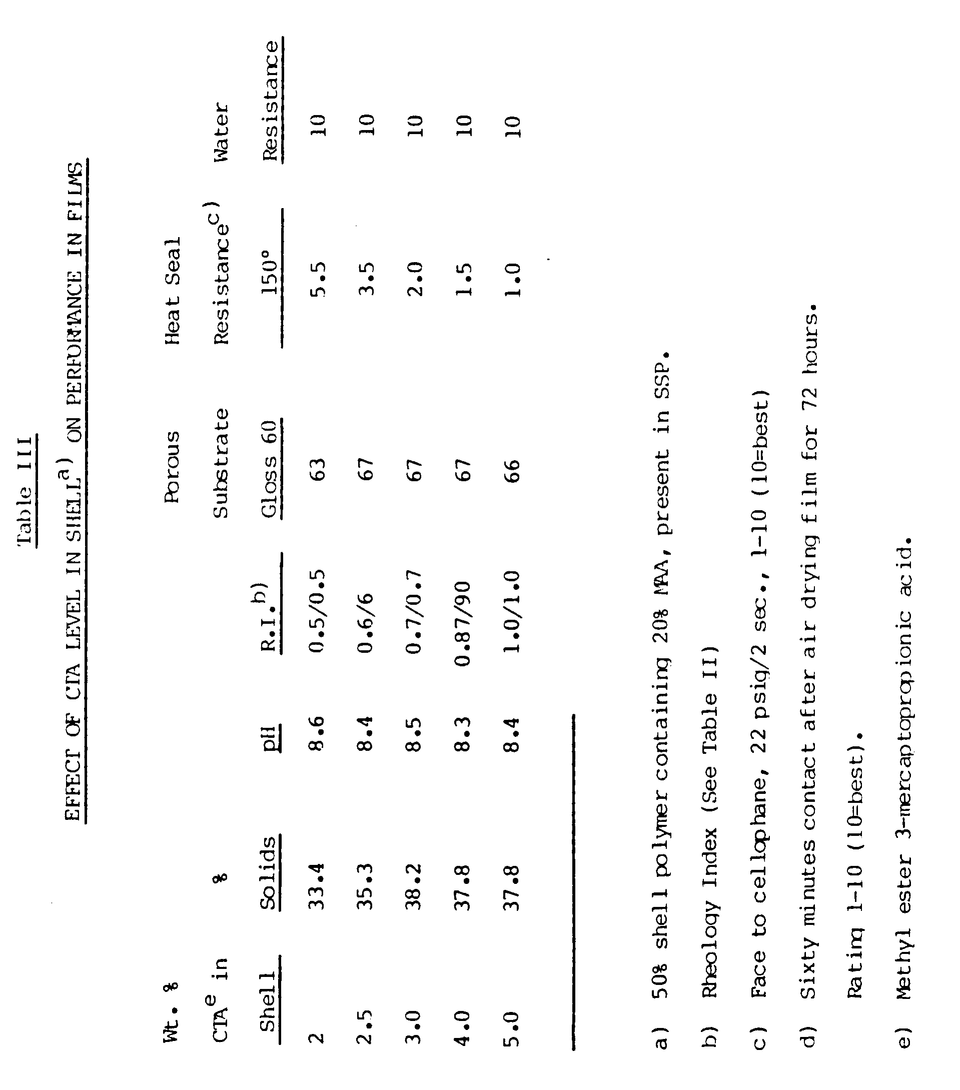

**Table IV**

| Effect of Shell Level on Performance | | |
|---|---|---|
| Weight % Shell^{a} in SSP | 60°C Gloss Porous Substrate | Heat Resistance^{b} |
| 30 | 46 | <100°C |
| 40 | 49 | 125°C |
| 50 | 63 | 139°C |

| | | |
|---|---|---|
| a) 30% MAA in the shell | | |
| b) Face to cellophane | | |

### Example 7

### Preparation of Core-Shell Polymer Having High Styrene Content

A stirred reactor containing 1645 grams of deionized (D.I.) water, 30.0 grams of sulfated nonylphenoxy polyethoxyethanol [Alipal CO-436 (58% active), from GAF Corp.] and 8.0 grams anhydrous sodium acetate was heated to 87°C under nitrogen. Next, 108g of monomer emulsion (M.E.) #1 was added to the reactor, followed by 5.0g ammonium persulfate in 50g D.I. water. After 15 minutes, the remainder of M.E. #1 was added slowly to the reactor over a 30 minute period, along with cofeed #1 while maintaining a reaction temperature of about 85°C. After a 30-minute hold (at 85°C), monomer emulsion (M.E.) #2 was added slowly to the reactor over a 150-minute period along with cofeed #2 while maintaining a reaction temperature of about 85°C. The reaction was kept at 85°C for 15 minutes after the addition of M.E. #2 and cofeed #2 was complete.

The resulting emulsion had a solids content of 45%, pH of 4.0 and particle size of about 110 nm. The polymer composition was 15% (65 MMA/10 Styrene/25 MAA with 3.5% Methyl-3-mercaptopropionate as chain transfer agent) and 85% polystyrene.

| | M.E. #1 | M.E. #2 |
|---|---|---|
| D.I. Water | 96 | 460 |
| Sulfated Nonylphenoxy Polyethoxythanol^{(a)} | 13.2 | - |
| Sodium Docecylbenzene Sulfate ^{(b)} | - | 103.5 |
| Methyl Methacrylate (MMA) | 195 | - |
| Styrene (STY) | 30 | 1700 |
| Methacrylic Acid (MAA) | 75 | - |
| MMP | 10.5 | - |

| | | |
|---|---|---|
| ^{(a)} Alipal CO-436 (58%) | | |
| ^{(b)} Siponate DS-4 (23%) from Alcolac, Inc. | | |

| | Cofeed #1 | Cofeed #2 |
|---|---|---|
| D.I. Water | 33 | 167 |
| Ammonium Persulfate | 1.2 | 5.8 |

### Example 8

### Testing in Formulations Designed for Ink Application

The polymer of Example 7 was admixed with a commercial ink pigment disperison, a polymeric dispersant, and water, following the recipe below:

| Ingredient | Amount (grams) |
|---|---|
| Pigment Dispersion [Sun Flexiverse Red RFD-1135 (Sun Chemical Co.)] | 40 |
| Polymeric Dispersant [Jon 678 (SC Johnson)] | 25 |
| Isopropanol | 2 |
| Polymer emulsion of Example 7* | 33 |
| Water | 1 |

| | |
|---|---|
| *Neutralized to pH 8 with NH₃ | |

The resultant ink composition exhibited acceptable viscosity, an acceptable ratio of high shear/low shear viscosity, and retained these properties upon standing for several weeks. When applied to paper, the ink exhibited acceptable gloss and dry rub resistance.

### Example 9

### Tesing as Letdown Vehicle with Commercial Pigment Formulations

A core-shell polymer was prepared as in Example 1, except that 2/3 of the core MAA was replaced with BA, and the MMP in the shell was raised to 3.25% by weight of polymer. The pH was adjusted to 8 with ammonia. Total solids of the polymer emulsion were 40%. The emulsion was then blended with two commercial color dispersants (Sun GPI Color Bases Phthalo Green and DNA Orange) at a 52:48 weight ratio of emulsion/color dispersant and diluted with water to a 25-30 second viscosity (#2 Zahn cup). Acceptable viscosity stability was seen for both formulations after seven days.

The samples were diluted to 16% pigment weight solids and applied to heat-resistant porous litho paper. These samples were compared to a control sample containing the same colors and pigment solids and a commercially available letdown vehicle (Joncryl 87 from SC Johnson, Inc.). The formulation of the present invention had equal ink transfer and rub resistance as the control sample and better stability on storage at 60 degrees C. for seven days.

### Example 10

### Preparation of a Three-Stage, Core-Shell Polymer Particles

A reaction vessel with provisions for heating and cooling was equipped with nitrogen inlet, mechanical stirrer, and provisions for the gradual addition of monomer emulsion and cofeed catalyst. The vessel was charged with 7228.6 g deionized water and 17.5 g 28% sodium lauryl sulfate, and the stirred mixture inerted with nitrogen and heated to 80-84°C. The stage one monomer emulsion was prepared from 1735.7 g deionized water, 186 g 28% sodium lauryl sulfate, 2603.5 g n-butyl acrylate, 2525.4 g methyl methacrylate, and 78.1 g methacrylic acid. A seed charge of 308 g of the stage one monomer emulsion was added to the kettle, and, after about 15 minutes, a kettle catalyst charge of 13 g ammonium persulfate in 260.4 g deionized water was added. After 10-20 minutes, a cofeed catalyst consisting of 7.8 g ammonium persulfate in 572.8 g deionized water, and the remaining stage one monomer emulsion were gradually added over 1.75-2.25 hours to the stirred reaction mixture which was maintained at 80°-84°C.

After the addition of stage one monomer emulsion was complete, the addition vessel was rinsed with 208.3 g deionized water. After the rinse was completed, there was a 15-30 minute hold during which the stage two monomer emulsion was prepared from 433.9 g deionized water, 22.4 g sulfated nonylphenoxy polyethoxyethanol emulsifier [Alipal CO-435 (58%)], 499.9 g n-butyl acrylate, 661.3 g methyl methacrylate, 140.6 g methacrylic acid, and 26.0 g n-dodecyl mercaptan. The stage two monomer emulsion was then gradually added over 45-60 minutes concurrent with a catalyst cofeed consisting of 2.6 g ammonium persulfate in 195.3 g deionized water. The catalyst cofeed was added at such a rate so as to extend 15-30 minutes beyond the end of the stage two monomer emulsion feed.

After the addition of stage two monomer emulsion was complete, the addition vessel was rinsed with 52.1 g deionized water. After the rinse was completed, there was a 15-30 minute hold during which the stage three monomer emulsion was prepared from 433.9 g deionized water, 22.4 g Alipal CO-436 (58%), 1041.1 g methyl methacrylate, 260.3 g methacrylic acid, and 52.1 g n-dodecyl mercaptan. The stage three monomer emulsion was then gradually added over 45-60 minutes concurrent with a catalyst cofeed consisting of 2.6 g ammonium persulfate in 195.3 g deionized water. The catalyst cofeed was added at such a rate so as to extend 15-30 minutes beyond the end of the stage three monomer emulsion feed.

After the addition of stage three monomer emulsion was complete, the addition vessel was rinsed with 52.1 g deionized water. After cooling to below 35°C, the latex was filtered through 100 mesh screen. Properties for the resultant latex were: 40% solids, pH 2.2, 170 nm particle size, and 12 cps Brookfield viscosity.

### Example 11

### Polymer Isolation as a Solid and Use as Portland Cement Modifiers

A slurry consisting of 28.8 grams slaked lime and 3.2 grams soda ash in 96 ml deionized H₂O was added with continuous agitation to 2000 grams of the emulsion prepared in Example 10. The neutralized emulsion was then spray-dried using a Bowen Model BLSA laboratory spray drier. Inlet air temperature was first adjusted to 150°C and then emulsion feed rate adjusted so as to provide outlet temperature of 65°C. Concurrently, a solid anticaking agent of the type taught in U.S. 3,985,704 is introduced to the top of the drying chamber at a rate to yield 5% in the final product. The resulting product had a moisture content of 1.7% and was a free-flowing white powder with average particle size of 60 microns.

Fifty grams of the spray dried powder prepared above were combined in a Hobart mixer with 1250 grams of 60 mesh sand, 500 grams of Portland Type I gray cement, and 5 grams solid defoamer (Colloids 523DD). Approximately 225 ml of tap water were added to yield a mortar with outstanding consistency, workability and trowelability. After suitable curing time under ambient conditions, the modified mortar possessed excellent adhesion to various substrates and had improved mechanical strength properties relative to unmodified mortars.

### Example 12

### Core-Shell Polymers Having Varying Compositions

Using the process of Example 1, core-shell polymers were made with varying monomer content, core to shell ratio, and chain transfer agent level The final polymer compositions are shown below. Particle sizes were in the range of 100-125nm.

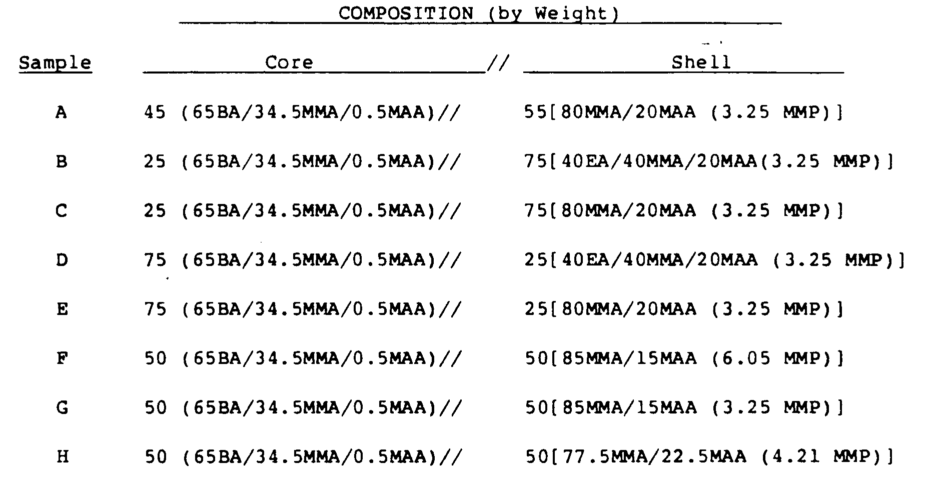

### Example 13

### Preparation of Core-Shell Polymers by Inverse Polymerization

In this procedure, the shell polymer was prepared first, followed by polymerization of the high molecular weight core polymer.

A stirred reactor containing 840 grams deionized (D.I.) water, 2.2 grams of ammonium lauryl sulfate, and 1.44 grams of sodium acetate trihydrate was heated, under a nitrogen atmosphere, to 88°C. The reaction was initiated by the addition of 35 grams of monomer emulsion #1 (M.E. #1) given below and 1.44 grams of ammonium persulfate dissolved in 30 grams of D.I. Water. After 15 minutes, the nitrogen was removed, the temperature was decreased to 85°C, and the remaining M.E. #1, along with 1.8 grams of ammonium persulfate (APS) in 100 grams of D.I. water, were added simultaneously over 80 minutes. Following this, 0.6 grams of ammonium lauryl sulfate and 1.44 grams of APS in 82 grams of D.I. water, were added during a 30 minute thermal hold (88°C). M.E. #2 along with 0.72 grams of APS in 100 grams of D.I. water, were then added simultaneously over 80 minutes at 83°C. After finishing the feeds, the reaction was held at 83°C for 30 minutes.

After diluting the polymer system to about 38.0% solids with D.I. water, it was neutralized to a pH of 7.5 with aqueous ammonia, giving a final solids of about 35% and a particle size of 130 nm.

| | M.E. #1 (shell) | M.E. #2 (core) |
|---|---|---|
| D.I. Water | 285 | 263 |
| Ammonium Lauryl Sulfate | 3.6 | 10.3 |
| Butyl Acrylate | - | 468 |
| Methyl Methacrylate | 504 | 248.4 |
| Methacrylic Acid | 216 | 3.6 |
| n-Dodecyl Mercaptan (nDDM) | 39.4 | - |
| Water, rinse | 90 | 40 |
| Final % Solids | 36.4% | 44.8% |
| Particle Size, nm | - | 126 |

### Example 14

### Preparation of Core-Shell Polymers Having Varying Compositions by Inverse Polymerization

Using the process of example 13, core-shell polymers were made with varying monomer content and chain transfer agent level. The final polymer compositions are shown below. Particle sizes were in the range of 100-130 nm.

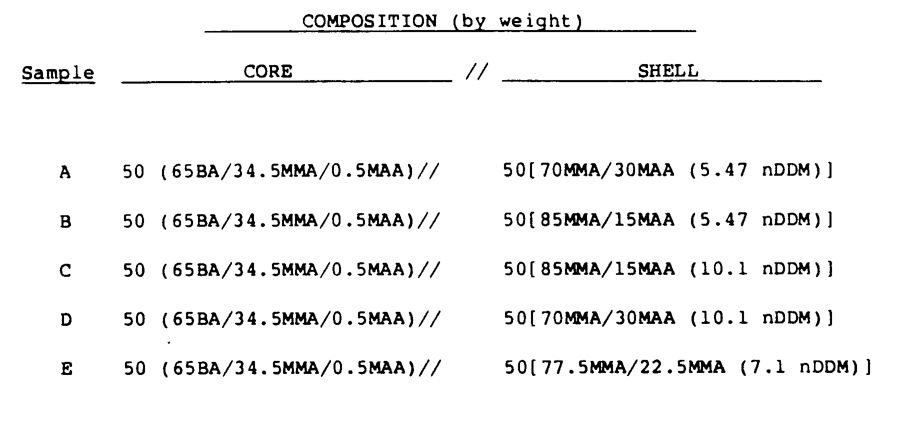

### Example 15

### Preparation of Core-Shell Polymers For Use In Leather Embossing

Following the procedures in Example 1, core-shell polymers were prepared having the following composition:

| COMPOSITION (By weight) | | |
|---|---|---|
| Sample | Shell (wt. %) (80 MMA/20 MAA) | Core |
| A | 30 | BA |
| B | 20 | 1 BA/1 MMA |
| C | 30 | 1 BA/1 MMA |
| D | 40 | 1 BA/1 MMA |
| E | 50 | 1 BA/1 MMA |
| F | 55 | 2 BA/1 MMA |
| G | 60 | 1 BA/1 MMA |

The polymers prepared above were independently incorporated into a typical leather embossing finish comprising 15-30 parts core-shell polymer, 40-60 parts water, 5-10 parts coalescents, 0.1-0.5 parts surfactant, 0.1-0.5 parts foam suppressant, 2-5 parts thickening agent, 0.2-0.5 parts ammonia, 3-5 parts wax, and 8-20 parts 2-staged heteropolymer latex. These embossing finishes were then applied to a test leather surface by spray or roll coating to serve as an embossing release coat. The coated surfaces were compressed by heat and pressure with metal platen (press conditions: 210°F, 35 tons, 3 second dwell time). These coatings were evaluated for hot plate release and compared to a control embossing coat formulation containing none of the core-shell polymers of this invention. The results of this evaluation are given below:

| Sample | Hot Plate Release |
|---|---|
| Control | Fair |
| A | Fair |
| B | Fair - Good |
| C | Good - Very Good |
| D | Good - Very Good |
| E | Good - Very Good |
| F | Very Good - Excellent |
| G | Very Good - Excellent |

### Example 16

### Preparation of Core-Shell Polymers for Floor Polish

A core monomer emulsion was prepared by mixing the following ingredients:

| Ingredients | Amount (grams) |
|---|---|
| D.I. Water | 560 |
| Sodium Lauryl Sulfate (28% solids) | 21 |
| Butyl Acrylate | 1190 |
| Methyl Methacrylate | 631 |
| Methacrylic Acid | 9 |

80% of the monomer emulsion was added to a 5-liter glass reactor containing 1160 grams deionized water and 2.3 grams sodium lauryl sulfate solution (28% solids). The reactor was fitted with a thermometer, stirrer and feed lines. The mixture was heated to 82-84°C and a polymerization initiator (6.4 grams ammonium persulfate dissolved in 40 grams of deionized water) was added. An exotherm of 2-4°C was observed and then the remaining monomer emulsion was added over a period of 2½ hours. Slight cooling was required to maintain a temperature of 83-86°C. After complete addition of the monomer emulsion, the mixture was maintained at 80-84°C for 15 minutes.

Shell monomer emulsions containing deionized water, emulsifier, methyl methacrylate, methacrylic aid, and methyl mercaptopropionate were overpolymerized on the core polymer emulsion to prepare core-shell polymers having the following composition:

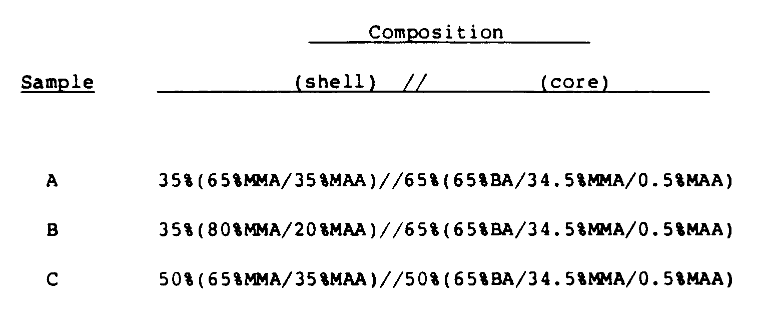

The above core-shell polymer latices were evaluated in floor polish formulations given in the table below and compared to control No. 1 (45% MMA/45% BA/10% MAA) and control no. 2 (52%MMA/25%BA/12%STY/8%MAA). The controls were prepared following the examples of U.S. Patent No. 3,808,036.

Vinyl composition tiles were used as the test substrates to examine the gloss of formulated systems. The tile surfaces were cleaned with a commercial cleaning compound, rinsed with water and allowed to air dry. The formulations were applied to the substrates volumetrically (amount depending on surface area) and dispersed evenly with a gauze sponge. After one hour at ambient conditions, the level of gloss was determined visually and by use of 60° and 20° Gardner gloss meters.

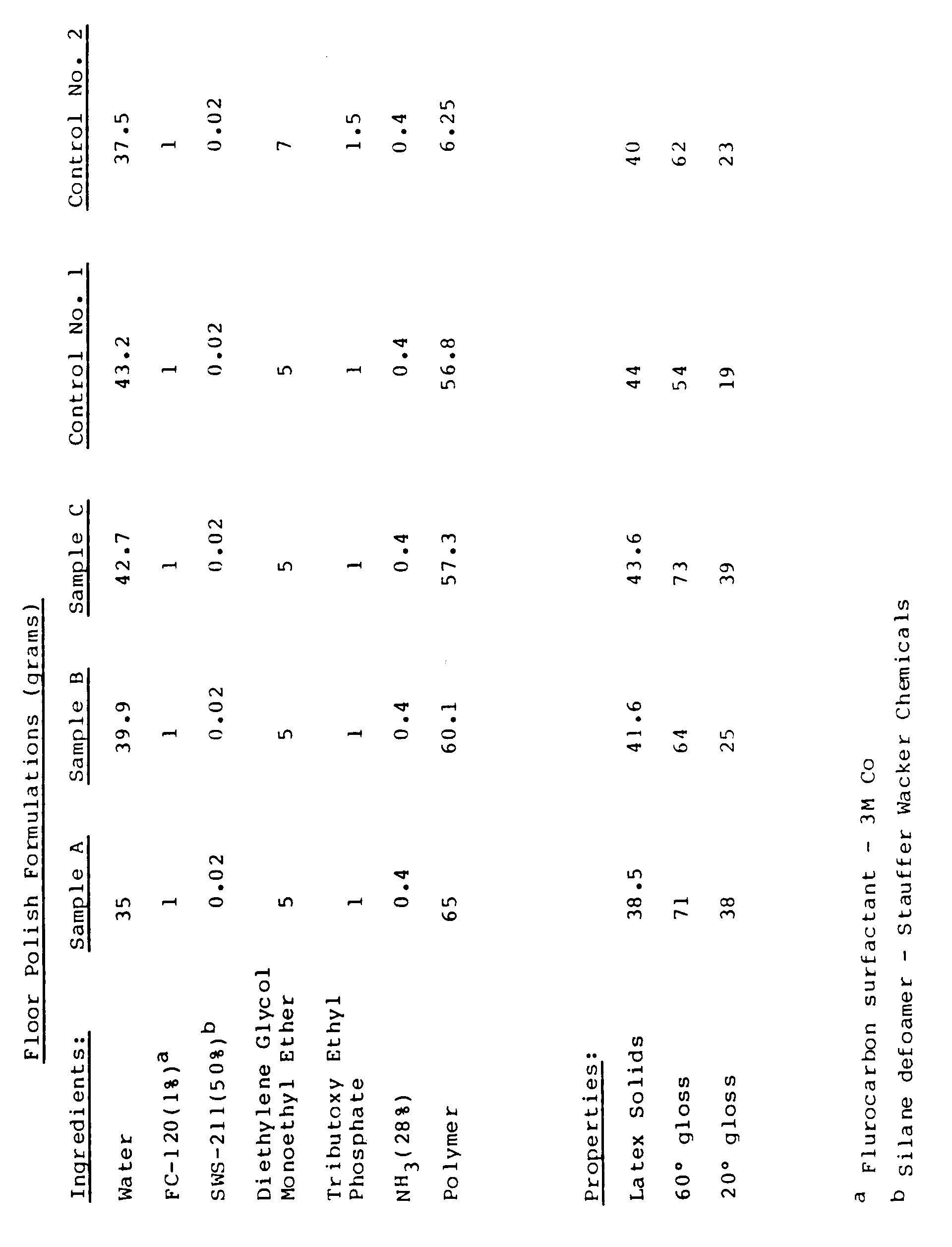

As shown in the above table, the core-shell polymers of this invention provide gloss performance in floor polishes which is superior to a conventional acrylic emulsion (Control No. 1) and equal or better than a styrenated acrylic emulsion (Control No. 2).

### Example 17

### Preparation of Core-Shell Polymers For Use in High Gloss Paint

A stirred reactor containing 950 grams deionized (D.I.) water, 9.0 grams sodium lauryl sulfate, and 9.0 grams sodium acetate trihydrate was heated under a nitrogen atmosphere to 81°C. The reaction was initiated by the addition of 50 grams of monomer emulsion #1 (M.E.#1) given below, turning off the nitrogen flow, and adding 1.6 grams of ammonium persulfate dissolved in 40 grams of D.I. water. After 19 minutes, with the temperature at 81°C., the remaining M.E. #1 (to which 9.6 grams of n-Doedcyl Mercaptan had been added, along with 0.42 grams ammonium persulfate in 25 grams D.I. water) were added simultaneously over 18 minutes. Next, 20 grams D.I. water were added and the reaction mixture held at 81°C for 10 minutes. M.E. #2 and 3.7 grams ammmonium persulfate in 200 grams D.I. water were then added simultaneously over a period of 158 minutes and 192 minutes respectively. After the M.E. #2 feed, 40 grams D.I. water were added and the reaction was held at 81°C for 34 minutes until the persulfate feed was completed. After diluting the polymer composition to 45.8% solids with D.I. water, it was neutralized to a pH of 8.25. The partile size was 175nm.

| | M.E. #1 (shell) | M.E. #2 (core) |
|---|---|---|
| D.I. Water | 53.0 | 477.0 |
| Sodium lauryl sulfate | 0.8 | 6.2 |
| Methyl Methacrylate | 128.0 | 165.6 |
| Methacrylic acid | 32.0 | -- |
| 2-Ethylhexyl acrylate | -- | 308.2 |
| Butyl Methacrylate | -- | 555.8 |
| Styrene | -- | 410.4 |

### Example 18

### Preparation of Core-Shell Polymers For Use in High Gloss Paint

A stirred reactor containing 950 grams deionized (D.I.) water, 9.0 grams sodium lauryl sulfate, and 9.0 grams sodium acetate trihydrate was heated under a nitrogen atmosphere to 81°C. The reaction was initiated turning off the nitrogen flow, and adding 1.6 grams of ammonium persulfate dissolved in 40 grams of D.I. water. After 19 minutes, with the termperature at 81°C, the remaining M.E. #1 (to which 19.2 grams of n-Dodecyl Mercaptan had been added, along with 0.82 grams ammonium persulfate in grams D.I. water) was added simultaneously over 34 minutes. Next, 20 grams D.I. water were added and the reaction mixture held at 81°C for 10 minutes. M.E. #2, given below, was added over a period of 147 minutes, along with 33 grams of ammonium persulfate in 175 grams D.I. water which was added over a period of 177 minutes. After addition of the M.E. #2 feed, 40 grams D.I. water was added and the reaction was held at 81°C for 30 minutes until the persulfate feed was complete. After diluting the polymer composition to 45.5% solids with D.I. water, it was neutralized to a pH of 8.15. The particle size was 139nm.

| | M.E. #1 (shell) | M.E. #2 (core) |
|---|---|---|
| D.I. water | 106.0 | 424.0 |
| Sodium lauryl sulfate | 1.6 | 5.5 |
| Methyl Methacrylate | 256.0 | 147.2 |
| Methacrylic acid | 64.0 | -- |
| 2-Ethylhexyl acrylate | -- | 273.9 |
| Butyl Methacrylate | -- | 494.1 |
| Styrene | -- | 364.8 |

### Example 19

### Preparation of Core-Shell Polymers For Use in High Gloss Paint

A stirred reactor containing 950 grams deionized (D.I.) water, 9.0 grams sodium lauryl sulfate, and 9.0 grams sodium acetate trihydrate was heated under a nitrogen atmosphere at 81°C. The reaction was initiated by the addition of 50 grams of monomer emulsion #1 (M.E. #1) given below, turning off the nitrogen flow, and adding 1.6 grams of ammonium persulfate dissolved in 40 grams of D.I. water. After 19 minutes, with the temperature at 81°C, the remaining M.E. #1 (to which 48. grams of n-Dodecyl Mercaptan had been added, along with 2.1 grams ammonium pursulfate in 125 grams D.I. water) was added simultaneously over 90 minutes. Next, 20 grams D.I. water were added and the reaction mixture held at 81°C for 30 minutes. M.E. #2, along with 2.02 grams ammonium persulfate in 100 grams of D.I. water, were then added simultaneously over 87 minutes. Next, 40 grams D.I. water were added and the reaction was held at 81°C for 30 minutes. After diluting the polymer composition to about 46% solids with D.I. water, it was neutralized to a pH of 8.8. The particle size was 114 nm. The final composition was diluted to 38.1% solids with D.I. water.

| | M.E. #1 (shell) | M.E. #2 (core) |
|---|---|---|
| D.I. water | 265.0 | 265.0 |
| Sodium lauryl sulfate | 4.0 | 3.44 |
| Methyl Methacrylate | 640.0 | 92.0 |
| Methacrylic acid | 160.0 | -- |
| 2-Ethtlhexyl acrylate | -- | 171.2 |
| Butyl Methacrylate | -- | 308.8 |
| Styrene | -- | 228.0 |

### Example 20

### Paint Formulations Containing Core-Shell Polymers

Paint formulations were prepared using the core-shell polymers from Examples 17, 18, and 19 according to the recipe given below. These paints were then tested for performance properties and all exhibited good block resistance, gloss and open time.

| | Paint A | Paint B | Paint C |
|---|---|---|---|
| Ingredients: | | | |
| Grind: | | | |
| Methyl Carbitol ^{a)} | 45.0 | 45.0 | 45.0 |
| Dispersant ^{b)} | 23.0 | 23.0 | 23.0 |
| Defoamer ^{c)} | 2.0 | 2.0 | 2.0 |
| TiO₂ | 200.0 | 200.0 | 200.0 |
| D.I. water | 20.0 | 20.0 | 20.0 |

| LET DOWN: | | | |
|---|---|---|---|
| Polymer Emulsion (Ex. 17) | 475.5 | -- | -- |
| Polymer Emulsion (Ex. 18) | -- | 487.7 | -- |
| Polymer Emulsion (Ex. 19) | -- | -- | 616.0 |
| Texanol ^{d)} | 29.4 | 26.6 | 17.6 |
| Defoamer ^{c)} | 2.0 | 2.0 | 2.0 |
| Ammonia | 1.5 | 1.0 | -- |
| Thickener (20.8% solids)^{e)} | 48.0 | 80.0 | 40.0 |
| D.I. water | 162.0 | 124.8 | 58.6 |

| | | | |
|---|---|---|---|
| ^{a)} Diethylene glycol, methyl ether from Union Carbide Corp. | | | |
| ^{b)} QR-681M from Rohm and Haas Co. | | | |
| ^{c)} Foammaster AP from Diamond Shamrock Chem. Co. | | | |
| ^{d)} 2,2,4-trimethyl-1,3-pentanediol monoisobutyrate from Eastman Chem. Co. | | | |
| ^{e)} QR-1001 from Rohm and Haas Co. | | | |

### Example 21

### Preparation of Core-Shell Polymer with Polyfunctional Monomer in the Core

A stirred reactor containing 1020 grams (g) deionized (D.I.) water, 1.69 g sodium lauryl sulfate and 0.9g of dibasic ammonium phosphate was heated to 81°C under nitrogen. Next 40 g of monomer emulsion (M.E.) #1 listed in Table A below was added to the reactor, followed by 1.1g of ammonium persulfate in 28g of D.I. water. After 17 minutes, the remainder of M.E. #1 was added slowly to the reactor over a 72 minute period, along with Cofeed #1 listed in Table A, while maintaining a reactor temperature of about 81°C. After a 20-minute hold (at 81°C), a solution of 1.1g ammonium persulfate in 55g of D.I. water was added to the reactor over a 10-minute period. Next, monomer emulsion #2 (listed in Table A) was added slowly to the reactor over a 108-minute period while Cofeed #2 (listed in Table A) was added over 138 minutes. A reaction temperature of 81°C was maintained throughout these additions.

The dispersion was neutralized by adding a solution of 24.4g dibasic ammonium phosphate in 632g of D.I. water to reactor over a 10-minute period. This was followed by the addition of a solution of 193g of 28% aqueous ammonia in 200g of D.I. water.

The final product had a solids content of 30%, viscosity of 980 cps and pH of 8.5. When 80g of this composition was mixed with 20g of isopropyl alcohol (IPA), the viscosity decreased and no coagulum formed. On aging for 10 days at 60°C the visocity did not increase, indicating the composition had excellent stability to IPA.

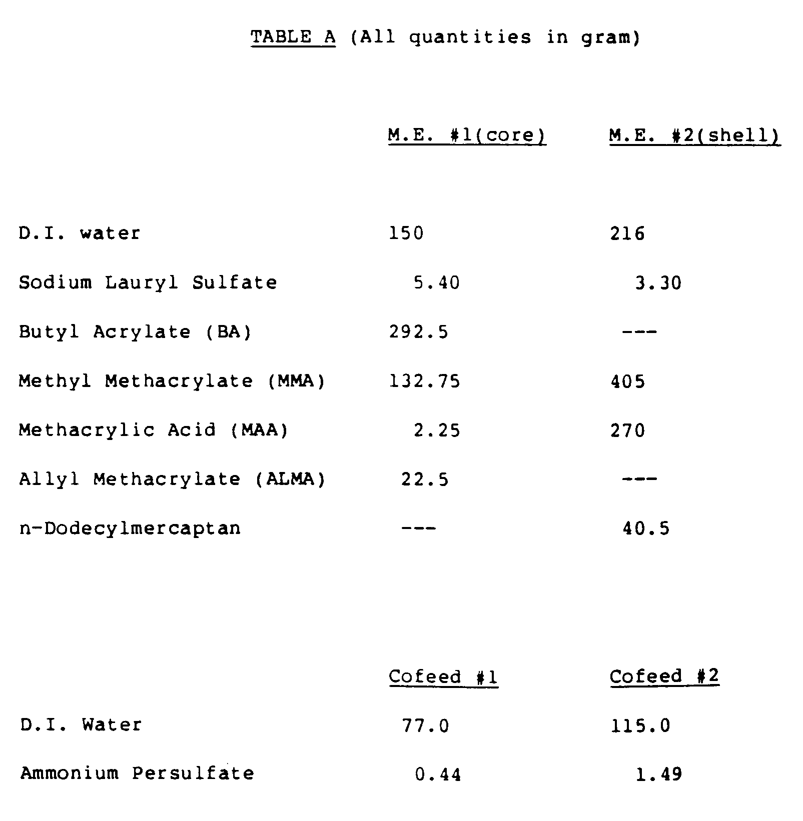

### Examples 22-27

### Variation in the Level of Polyfunctional Monomer in the Core

Following the process of Example 21, the weight % of allyl methacrylate in the first stage (core) was varied from 0-10%. The amount of monomers in grams in the first stage along with particle size and the stability of the final product toward IPA (as described in Example 21) is given in Table B.

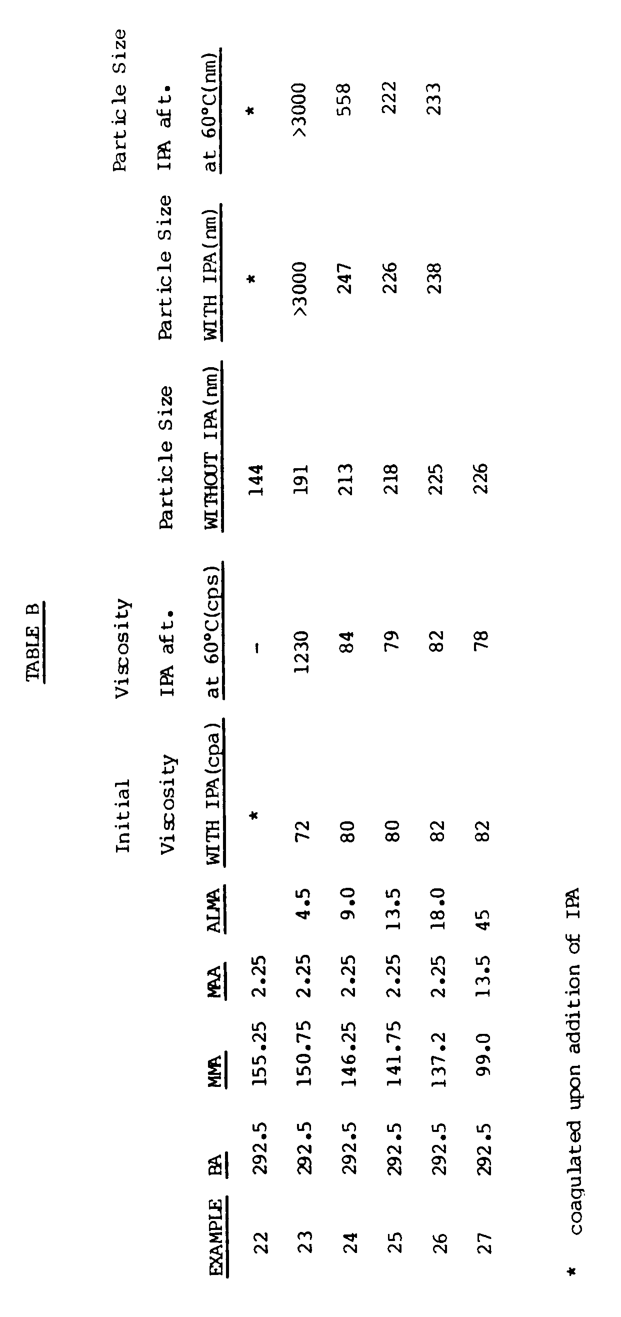

### Examples 28-33

Following the process of Example 21, core-shell polymers were prepared using 2-ethylhexyl acrylate (2-EHA) in the core in place of butyl acrylate. The amount of monomers (in grams) in the core and the stability of the final product towards IPA are given in the Table C. Monomer Emulsion #2 for the second stage shell polymer contained 438.75 grams MMA and 236.25 grams MAA along with the remaining ingredients given in Table A. In Examples 28-33, 169 grams of the 28% aqueous ammonia solution was used in the neutralization step and the final product had a solids content of 27%. All other conditions were the same as in Example 21.

Although Example 28, containing no polyfunctional monomer, did not thicken on heat aging, the particle size of the dispersion increased to an unacceptable level and film properties were inferior to the examples containing the polyfunctional monomer.

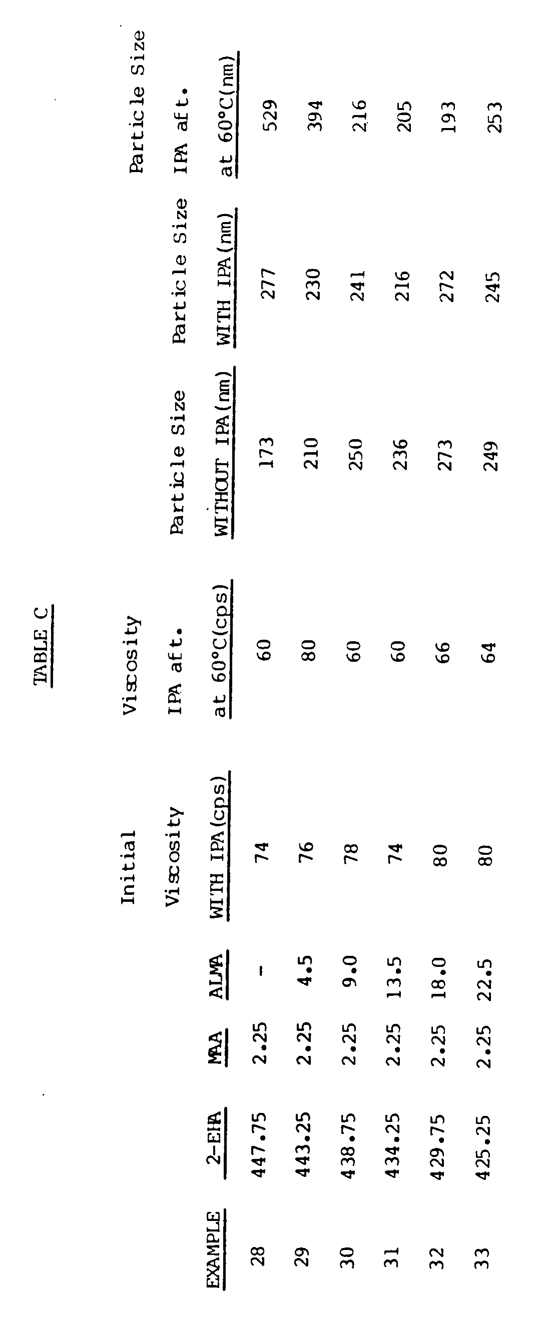

### Example 34

Following the process of Example 21, core-shell polymers were prepared using the monomer emulsions, M.E. #1 and M.E. #2, given in Table D below. The resulting composition had a solids content of 30%, pH of 8.7 and vicosity of 2700 cps. 80 grams of the polymer composition were diluted with 20 grams of IPA. The polymer composition with IPA had an initial viscosity of 67 cps. After heat-aging for 10 days at 60°C the viscosity was 102 cps and no coagulum formed.

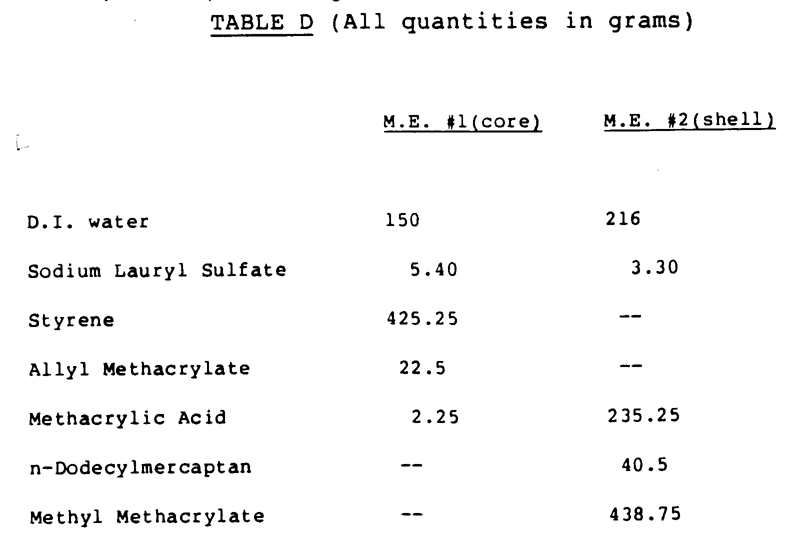

### Example 35

### Use of Allyl Acrylate as the Polyfunctional Monomer in the Core

A stirred reactor containing 805g of D.I. water 2.05g sodium lauryl sulfate and 1.37g of dibasic ammonium phosphate was heated to 81°C under nitrogen. Next, 45g of monomer emulsion (M.E.) #1 listed in Table E below was added to the reactor, followed by 1.37g of ammonium persulfate in 34g of D.I. water. After 17 minutes, the remainder of M.E. #1 was added slowly to the reactor over a 60-minute period, along with Cofeed #1 listed in Table E. A reactor temperature of about 81°C was maintained during this time and for 30 minutes following the additions. Ten minutes before the start of the stage two polymerization, 1.37g of ammonia persulfate in 68g of D.I. water was added dropwise to the reaction. M.E. #2 (listed in Tabel E) was added slowly to the reactor over a 90-minute period, beginning 30 minutes after the addition of M.E. #1 was complete. Cofeed #2 (listed in Table E) was added simultaneously with M.E. #2 at a rate such that the addition was complete 30 minutes after the addition of M.E. #2 was complete.

The polymer composition was buffered by the dropwise addition of a solution of 29.33g dibasic ammonia phosphate in 400g of D.I. water. The final product had a solids content of 40%, pH of 5.35 and viscosity of 13 cps (unneutralized). After neutralization to pH 8.0-9.0 with ammonia, the polymer composition showed excellent stability to alcohol as described in Example 21.

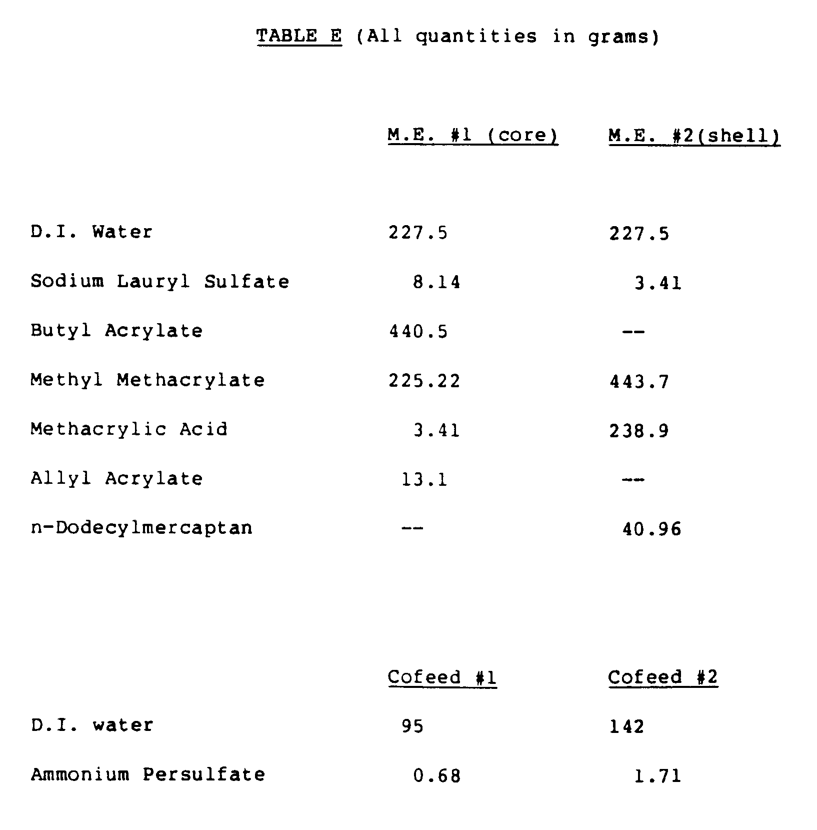

### Example 36

### Use of Diallyl Maleate as the Polyfunctional Monomer in the Core

Following the procedure of Example 25, except that allyl methacrylate was replaced with diallyl maleate, core-shell polymers according to this invention were prepared. The compositions were tested for stability toward isopropyl alcohol as described in Example 21 and exhibited enhanced stability to isopropyl alcohol.

### Example 37

### Polyfunctional Monomer Added Late in the Core Preparation

Core-shell polymers were prepared as in Example 21, except the M.E. #1 was replaced with that shown in Table F. Also, 13.5g of allyl methacrylate was added and stirred into M.E. #1 after one-half of M.E. #1 had been added to the reaction. This resulted in an allyl methacrylate-rich phase being polymerized onto the allyl methacrylate-free initial stage core particles. When tested for alcohol stability (as described in Example 21), the viscosity rose from 146 cps to 345 cps and no coagulum formed, indicating that the polymer composition and enhanced stability to alcohol.

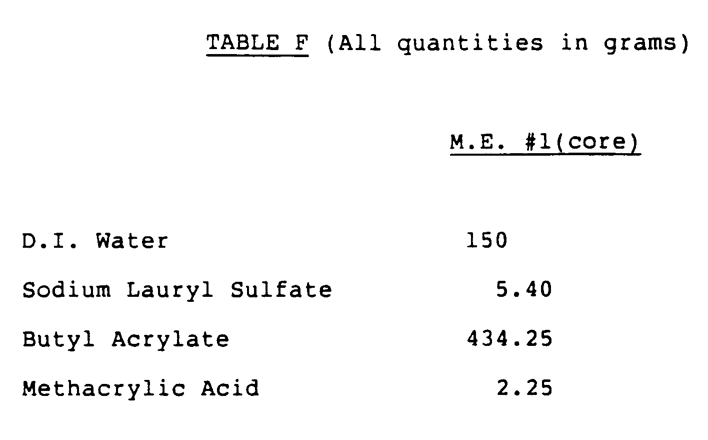

### Example 38

### Addition of Polyfunctional Monomer After Polymerization of the Core

A latex core was prepared as described in Example 21 using the monomer emulsion (M.E.) #1 described in Table G. Next, the reactor was cooled to 60°C and 56.25g of 1,3-butylene dimethacrylate added. After stirring for about 15 minutes, solutions of 1.0g t-butyl hydroperoxide in 10g D.I. water, 0.5g sodium sulfoxylate formaldehyde in 20g D.I. water and 5g of 0.15% ferrous sulfate heptahydrate were added to the reactor. The temperature rose from 54°C to 57°C. The reactor was heated to 81°C, and after 30 minutes, a solution of 1.1g of ammonia persulfate in 55g of D.I. water was added to the reactor over a 10-minute period. Next, M.E. #2 (listed in Table G) was added slowly to the reactor over a 98-minute period while Cofeed #2 (listed in Table G) was added over 128 minutes. A reaction temperature of about 81°C was maintained through these additions. The resin was neutralized as described in Example 21.

The product had a solids content of 29%, pH of 8.97, and viscosity of 680 cps. The viscosity of the polymer composition increased in the alcohol stability test (as described in Example 21), but it exhibited enhanced stability to alcohol.

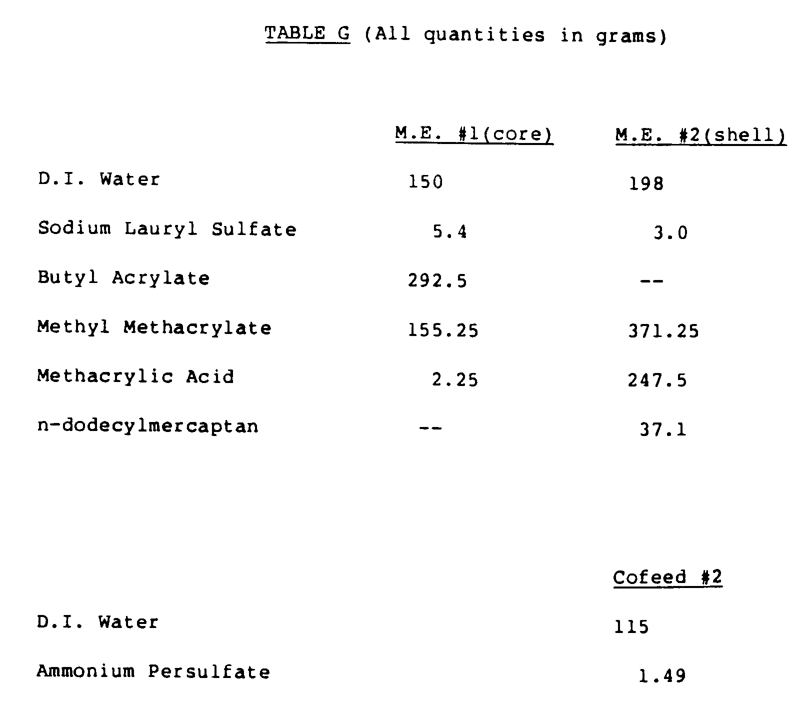

### Examples 39-41

Following the procedure of Example 38, additional core-shell polymers were prepared. In Example 39, 447.75 grams of 2-ethylhexyl acrylate were used in M.E. #1 in place of the butyl acrylate and methyl methacrylate, and 402.2g of methyl methacrylate and 216.6 g of methacrylic acid were used in M.E. #2. Example 40 was prepared similarily to Example 39, except that the 1,3-butylene dimethacrylate was replaced with allyl methacrylate. Example 41 was prepared similarly to Example 39, except that the 1,3-butylene dimethacrylate was replaced with a 2:1 blend of 2-ethylhexyl acrylate and allyl methacrylate. In all examples the polymer compositions showed enhanced stability toward isopropyl alcohol as described Example 21.

### Example 42

### Use of Dual Chain Transfer Agents in the Shell

A stirred reactor containing 902g of D.I. water, 2.4g sodium lauryl sulfate and 4.0g sodium acetate trihydrate was heated to 81°C under nitrogen. Next, 50g of M.E. #1 (given in Table H below) was added to the reactor, followed by 1.6g of ammonium persulfate in 40g of D.I. water. After 17 minutes, the remainder of M.E. #1 was added to the reactor over a 90-minute, along with Cofeed #1 (listed in Table H) while maintaining a reactor temperature of about 81°C. After a 20-minute hold (at 81°C), a solution of 1.6g ammonium persulfate in 80g of D.I. water was added to the reactor over a 10-minute period. Next, M.E. #2 (listed in Table H) was added slowly to the reactor over a 90-minute period while Cofeed #2 (listed in Table H) was added over 120 minutes. A reaction temperature of about 81°C was maintained through these additions.

The final product had a solids content of 45%, pH of 3.50 and viscosity of 30 cps (unneutralized). It was neutralized to a pH of 8.0-9.0 with aqueous ammonia. The composition showed enhanced alcohol stability ad described in Example 21.

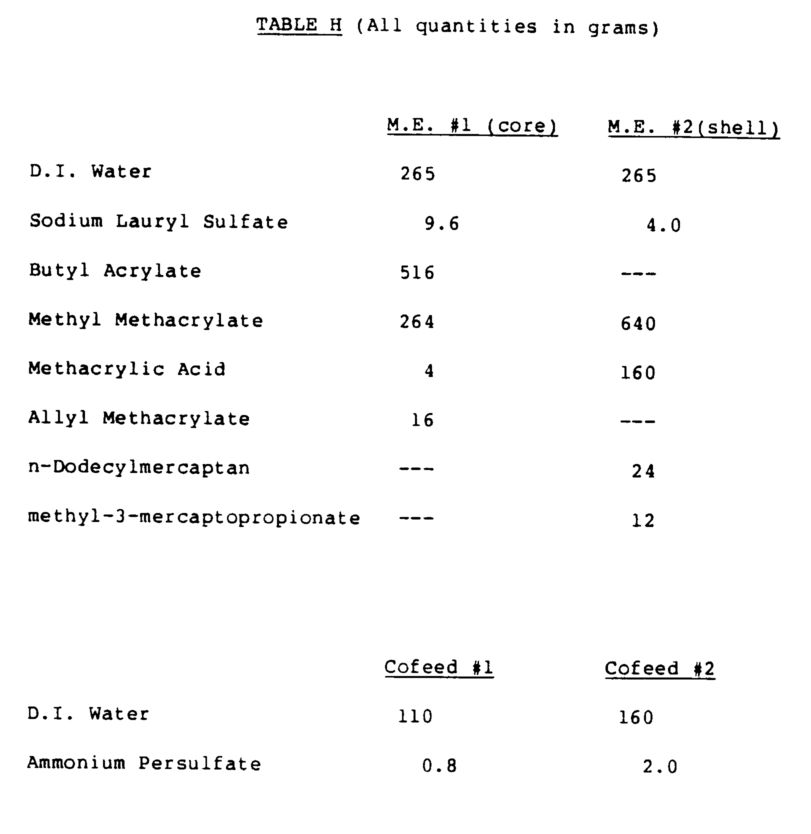

### Example 43

### Sequential Addition of Dual Chain Transfer Agents to The Shell

Core-shell polymers were prepared as in Example 42, except tht Monomer Emulsion #2 was split into two emulsions (M.E. #2A and M.E. #2B) was listed in Table I below. M.E. #2A was added first over an 18-minute period during preparation of the shell polymer. M.E. #2B was subsequently added over a 72-minute period. All other aspects of the synthesis were the same as given in Example 42.

After neutralization with aqueous ammonia, the polymer composition showed excellent alcohol stability as described in Example 21.

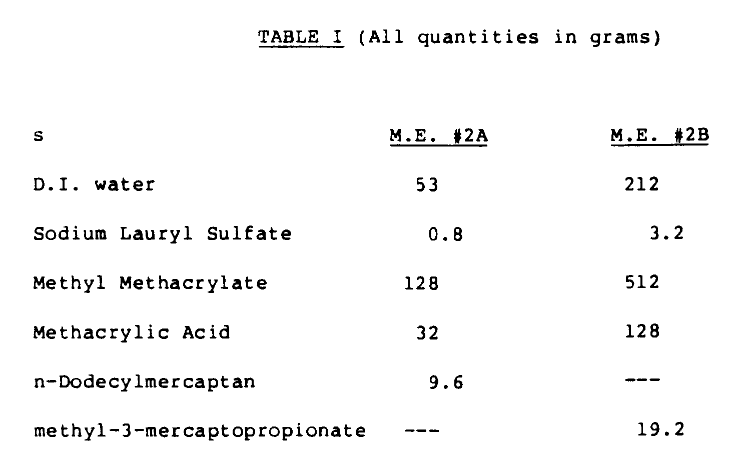

### Example 44

### Use of Butyl-3-Mercaptopropionate as the Chain Transfer Agent in the Shell

A stirred reactor containing 1000g D.I. water and 5.2g of 28% sodium lauryl sulfate was heated to 82°C. Next, 35g of monomer emulsion (M.E.) #1 listed in Table J was added to the reactor, followed by 1.2g of ammonium persulfate in 45g of D.I. water. After about 15 minutes, the remainder of M.E. #1 was added slowly to the reactor over a 72-minute period, along with Cofeed #1 listed in Table J, while maintaining a reactor temperature of about 81°C. After a 20-minute hold (at 81°C) a solution of 1.7g ammonium persulfate and 6.0g Aerosol A-103 (34%) in 125g of D.I. water was added to the reactor over a 10-minute period. Next, M.E. #2 (listed in Table J) was added slowly to the reactor over a 108-minute period while Cofeed #2 (listed in Table J) was added over 138 minutes. A reaction temperature of about 81°C was maintained through these additions.

The dispersion was buffered to a pH of 5.5-6.0 with 50.4g of dibasic ammonium phosphate dissolved in 180g of D.I. water and then neutralized to a pH of 8-9 with 28% aqueous ammonia. The final product had a solids content of 38%, a pH of 9.0, and viscosity of 327 cps. The polymer composition had excellent alcohol stability as described in Example 21.

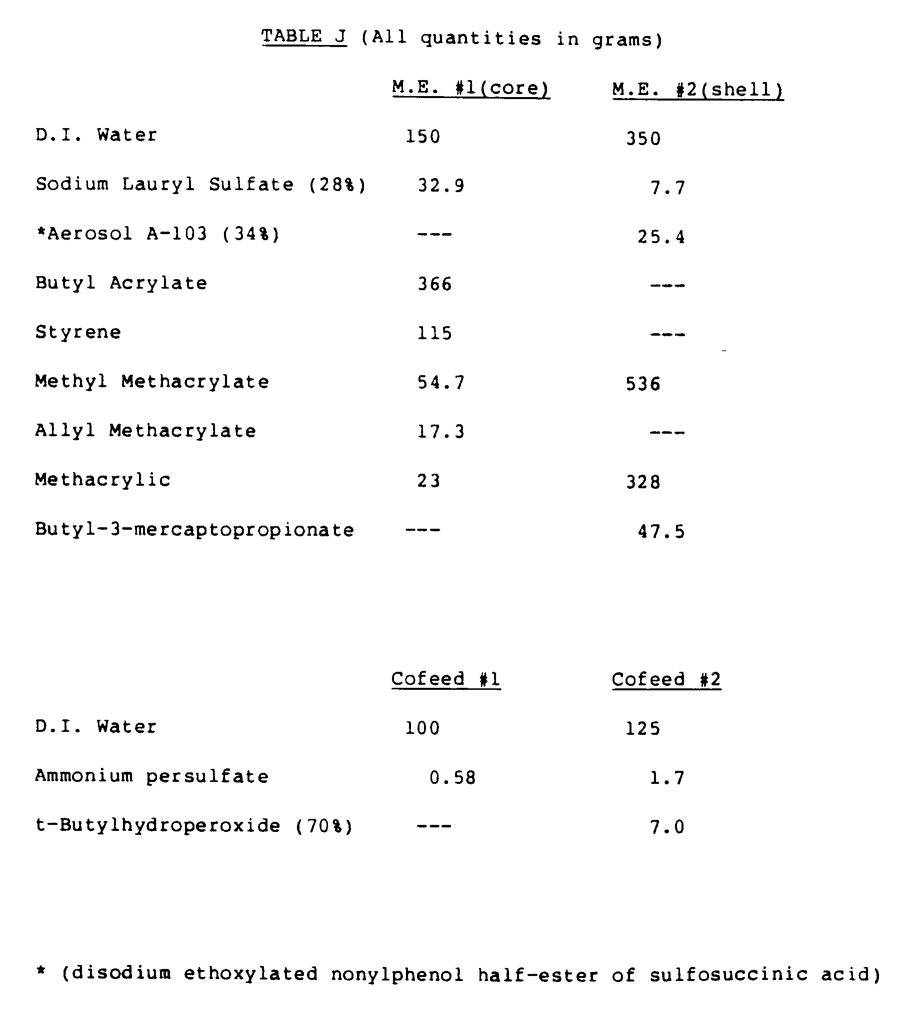

### Example 45

### Core-Shell Polymer Prepared by First Polymerization of Shell in Presence of Polyfunctional Monomer

A stirred reactor containing 748g of D.I. water, 4.5g of sodium acetate trihydrate and 9.8g of 23% sodium dodecylbenzensulfonate was heated to 81°C under nitrogen. Then, 32g of monomer emulsion (M.E.) #1 listed in Table K was added to the reactor, followed by 0.68g ammonium persulfate in 25g of D.I. water. After 13 minutes, the remainder of M.E. #1 was added slowly to the reactor over a 60-minute period, along with Cofeed #1 listed in Table K, while maintaining a reactor temperature of about 81°C. After a 30-minute hold at 81°C, M.E. #2 (listed in Table K) was added slowly to the reactor over a 60-minute period along with Cofeed #2 (listed in Table K). The reaction was held at 81°C for 30 minutes, and then cooled to 55°C.

The final product had a solids content of 41.4%, pH of 4.78 and viscosity of 22 cps (unneutralized). After neutralization the polymer composition showed excellent alcohol stability as described in Example 21.

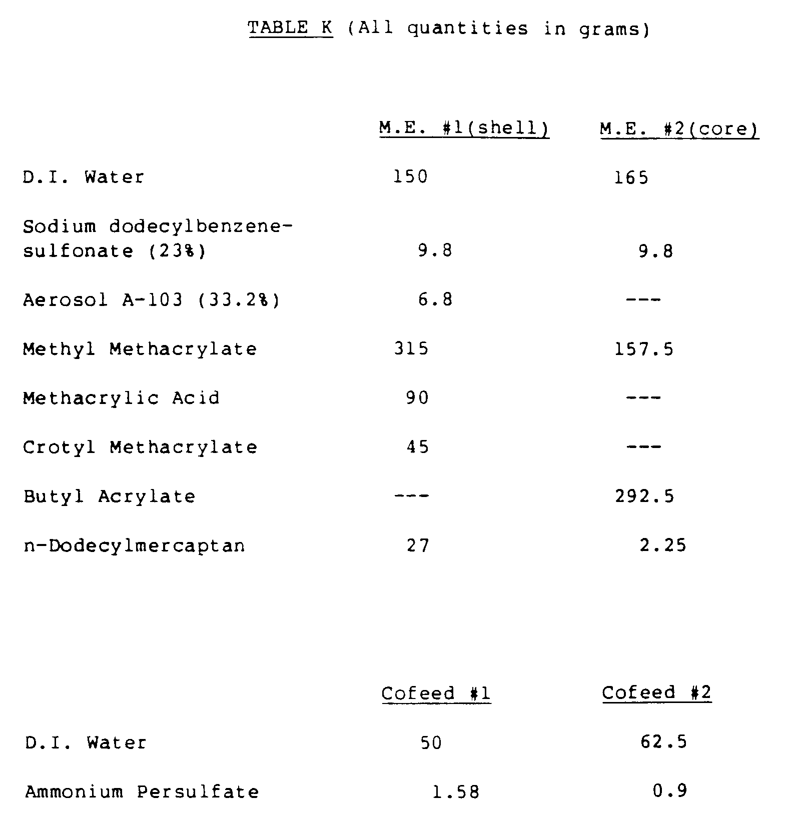

### Example 46

Following the procedures of Examples 45, core-shell polymers were prepared using the monomer emulsions listed in Table L below. After neutralization to pH 8.0-9.0, the polymer composition exhibited excellent alcohol stability as described in Example 21.

**TABLE L**

| | M.E.#1(shell) | M.E.#2(core) |
|---|---|---|
| D.I. Water | 150 | 165 |
| Sodium Dodecylbenzenesulfonate | 9.8 | 9.8 |
| (23%) | | |
| Aerosol A-103 (33.2% | 6.8 | --- |
| Methyl Methacrylate | 315 | 155.25 |
| para-Methylstyrene | 90 | 2.25 |
| Butyl Acrylate | --- | 292.5 |
| Butyl-3-mercaptopropionate | 21.6 | 2.25 |

### Example 47

### Core-Shell Polymer with High Core:Shell Ratio

A stirred reactor containing 1102g of D.I. water was heated to 81°C under nitrogen. Next, 40g of monomer emulsion (M.E.) #1 listed in Table M was added to the reactor over a 135-minute period, along with Cofeed #1 listed in Table M, while maintaining a reactor temperature of about 81°C. After 30-minute hold (at 81°C), M.E. #2 (listed in Table M) was added slowly to the reactor over a 45-minute period while Cofeed #2 (listed in Table M) was added over 75 minutes. A reaction temperature of about 81°C was maintained through these additions.

After neutralization to pH 8.0-9.0 the composition showed excellent alcohol stability. The composition also had enhanced stability to butyl cellosolve.

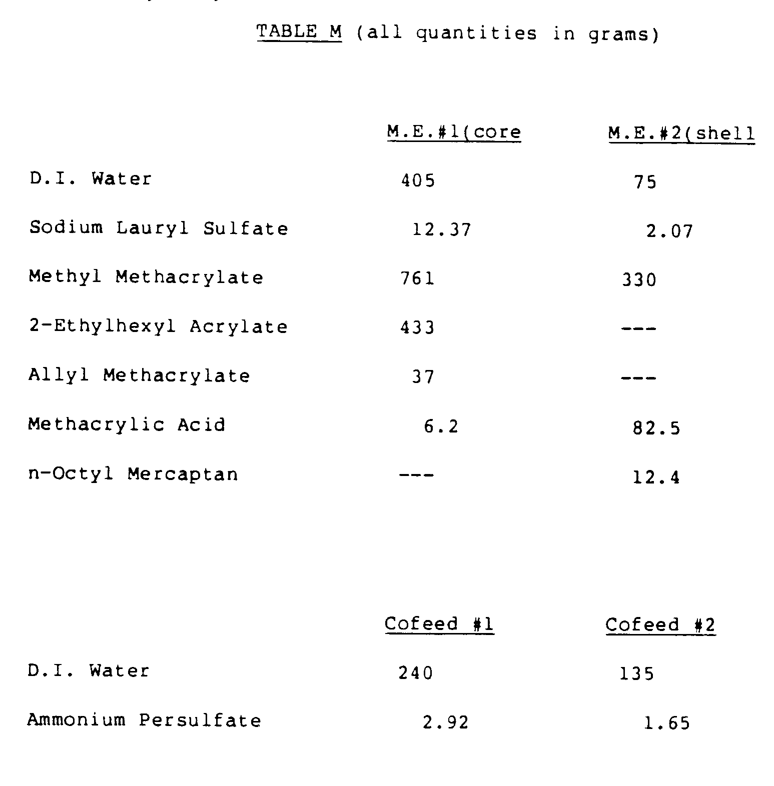

### Example 48

### Use of 1,3-Butadiene as the Polyfunctional Monomer in the Core

A latex having a composition of 69.47 parts by weight (pbw) butadiene, 28.31 pbw styrene and 2.22 pbw methyl methacrylate was prepared as described in U.S. Patent No. 4,443,585. The latex had a solids content of 34% and a particle size of approximately 80 nanometers.

A stirred reactor containing 400g D.I. water and 1739g of the latex described above was heated to 85°C under nitrogen. A solution of 1.2g of ammonium persulfate and 4.4g Aerosol A-103 (33%) in 60g of D.I. water was added to the reactor. The monomer emulsion (M. E.) described in Table N was added slowly to the reactor over a 90-minute period. A solution of 1.8g of ammonium persulfate in 150g D.I. water was added simultaneously with the M.E. at such a rate so that its addition was complete 30 minutes after M.E. addition was complete. A reactor temperature of about 85°C was maintained during these additions. The reaction was cooled to 55°C.

The polymer was buffered by the dropwise addition of a solution of 6.7g dibasic ammonium phosphate in 20g of D.I. water and neutralized with 114 g of 28% aqueous ammonia. The product had a solids content of 38%, pH of 9.1 and viscosity of 3400 cps. The polymer composition showed excellent stability to alcohol as described in Example 21.

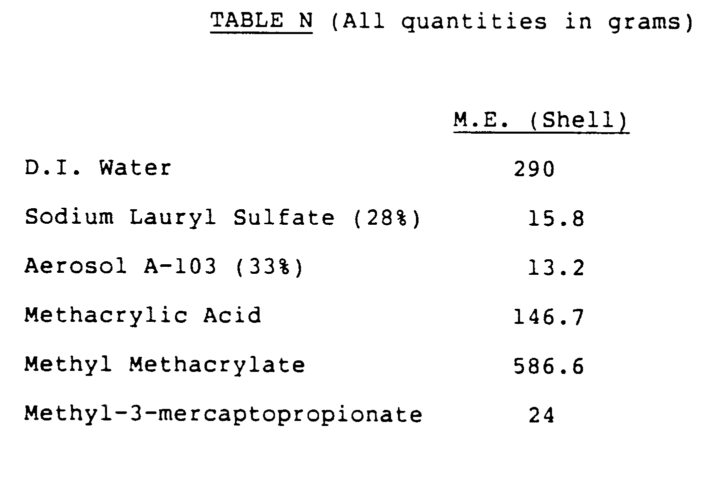

### Example 49

### 50:50 Core-Shell Polymers with Polyfunctional Monomer in the Core

Following the procedures of Example 42, except that the n-dodecylmercaptan and methyl-3-mercaptopropionate were replaced with 48 grams n-dodecylmercaptan, core-shell polymers were prepared for comparison to the comparative Examples 51 and 52 which follow. The core-shell polymer consisted of 50% core polymer having a composition of 64.5 pbw butyl acrylate, 33 pbw methyl methacrylate, 2 pbw allyl methacrylate and 0.5 pbw methacrylic acid and 50% shell polymer having a composition of 80 pbw methyl methacrylate and 20 pbw methacrylic acid. The final unneutralized polymer composition had a solids content of 45%, pH of 4.1, and viscosity of 45 cps. The particle size of the core polymer was 96 nanometers. After polymerizing the shell, a particle size of 122 nanometers resulted. After neutralization, the polymer composition showed excellent alcohol stability as described in Example 21.

### Example 50

### Polyfunctional Monomer and Chain Transfer Agent in the Core

A stirred reactor containing 1102g of D.I. water, 4.95g sodium lauryl sulfate and 4.12g of sodium acetate trihydrate was heated to 81°C under nitorgen. Next 40g of M.E. #1 listed in Table O was added to the reactor, followed by 1.65g ammonium persulfate in 42g of D.I. water. After 17 minutes, the remainder of M.E. #1 was added slowly to the reactor over a 135-minute period, along with Cofeed #1 listed in Table O, while maintaining a reactor temperature of about 81°C. After a 30-minute hold (at 81°C), M.E. #2 (listed in Table O) was added slowly to the reactor over a 45-minute period while Cofeed #2 (listed in Table O) was added over 75 minutes. A reaction temperature of about 81°C was maintained throughout these additions.

On neutralization to pH 8.0-9.0, a resin having excellent alcohol stability resulted. This resin was also shown to be stable to the addition of common coalescents, such as butyl cellosolve.

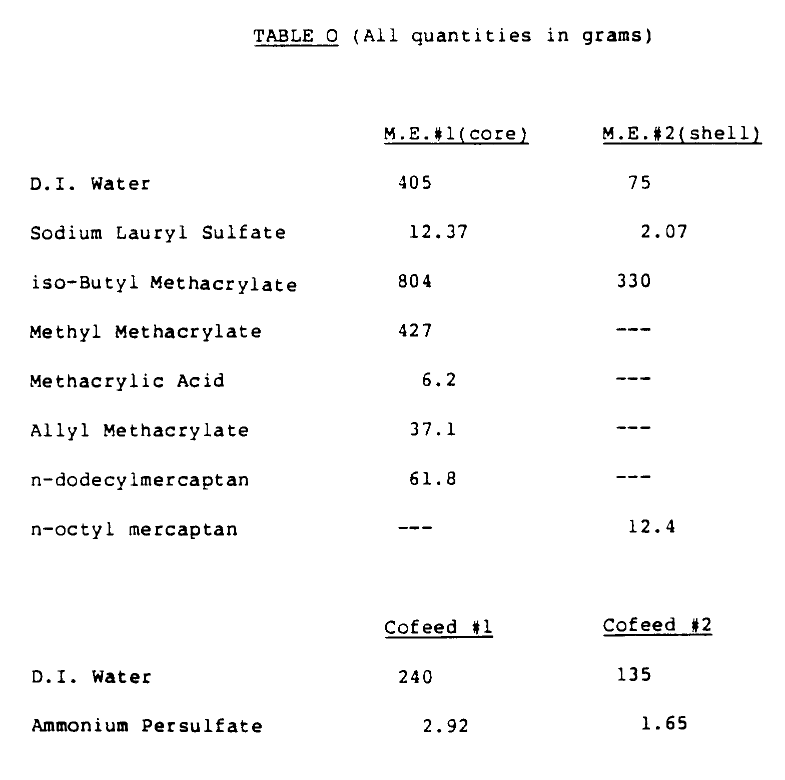

### Example 51

### 50:50 Core-Shell Polymers Without Polyfunctional Monomer in the Core (Comparative)

Following the procedures of Example 29, except using monomer emulsion (M.E.) #1 given in Table P, core-shell polymers falling outside the scope of this invention were prepared. After neutralization, the polymer composition was not alcohol stable in the test described in Example 21. After being mixed with isopropyl alcohol, the polymer composition coagulated to form large solid chunks of polymer.

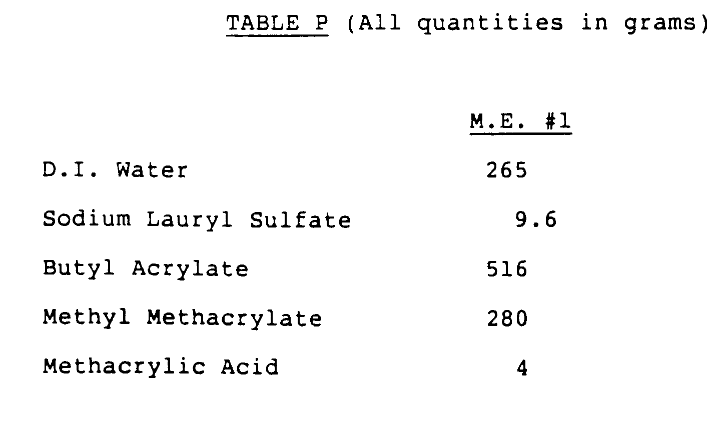

## Claims

1. A process for preparing a polymer blend, the process comprising
adding alkali to an initial core-shell polymer particle having an alkali-insoluble, emulsion polymer core and an alkali-soluble, emulsion polymer shell attached to or associated with the core;
wherein the alkali neutralises and substantially, but not totally, dissolves the shell polymer such that a portion of the shell (i.e. less than 50%) remains attached to or associated with the core
thereby forming a blend of neutralised core-shell polymer and an aqueous solution of neutralised shell polymer;
wherein the weight ratio of core polymer to shell polymer is from 85:15 to 15:85;
wherein each of the core and shell is independently sequentially polymerized by emulsion polymerization from monomer systems comprising a monomer selected from methyl acrylate, ethyl acrylate, butyl acrylate, 2-ethylhexyl acrylate, decyl acrylate, methyl methacrylate, ethyl methacrylate, butyl methacrylate, hydroxethyl methacrylate, hydroxy propyl methacrylate, acrylonitrile, acrylic acid, methacrylic anhydride, maleic anhydride, itaconic anhydride, fumaric anhydride, stryene, substituted stryene, vinyl acetate, and other C₁ to C₁₂ alkyl or hydroxy alkyl acrylates and methacrylates;
wherein the core contains less than 10% by weight acid-containing unsaturated monomer units;
wherein the shell contains from 10 to 60% by weight of acid-containing unsaturated monomer units; and
wherein from 0.8 to 1.5 equivalents of alkali per equivalent of acid in the shell polymer are added.

2. The process of Claim 1 wherein the weight average molecular weight, as determined by gel permeation chromatography, of said shell polymer is 5,000 to 100,000 and said core polymer is greater than 8,000.

3. The process of Claim 1 or Claim 2 wherein the T_{g} of said core polymer is about -65°C to 100°C.

4. The process of any one of the preceding claims wherein said core polymer is polymerized first to a particle size of 60 to 140 nm.

5. The process of Claim 1 wherein said core polymer is polymerized second, and due to the hydrophobicity of the core polymer it becomes a domain within the particles of the alkali-soluble shell polymer.

6. The process of any one of the preceding claims wherein said shell polymer has a T_{g} of at least 100°C.

7. The process of any one of the preceding claims wherein said shell is polymerized from a monomer mixture containing 20 to 50% methacrylic acid and said core is polymerized from a monomer mixture containing 0.01 % to about 1.5% methacrylic acid.

8. A process according to any one of the preceding claims wherein said base is selected from the group consisting of ammonia, triethylamine, monomethanolamine, dimethylaminoethanol, sodium hydroxide and potassium hydroxide.

9. A process according to any one of the preceding claims wherein said core and said shell have been substantially chemically grafted together.

10. A process of Claim 9 wherein said core and said shell are chemically grafted together using one or more polyfunctional compounds selected from:
a) polyfunctional compounds having two or more sites of unsaturation,
b) reactive chain transfer agents having two or more abstractable atoms, and
c) hybrid polyfunctional compounds having one or more abstractable atoms and one or more sites of unsaturation.

11. A process of Claim 10 wherein said polyfunctional compound is present during the emulsion polymerization of said core, followed by emulsion polymerization and grafting of said shell to said core, and preferably said polyfunctional compound is selected from the group consisting of allyl-, methallyl-, vinyl-, and crotyl-esters of acrylic, methacrylic, maleic (mono- and di-esters), fumaric (mono- and di-esters) and itaconic (mono- and diesters) acids; allyl-, methallyl-, and crotyl-vinyl ether and thioether; N- and N,N-di-allyl-, methallyl-, crotyl-, and vinyl-amides of acrylic acid and methacrylic acid; N-allyl-, methallyl-, and crotyl-maleimide; vinyl esters of 3-butenoic and 4-pentenoic acids; diallyl phthalate; triallyl cyanurate; O-allyl-, methallyl-, crotyl-, 0-alky-, aryl-, P-vinyl-, P-allyl-, P-crotyl-, and P-methallyl-phosphonates; triallyl-, trimethallyl-, and tricrotyl-phosphates; O-vinyl-,O,O-diallyl-, dimethallyl-, and dicrotyl- phosphates; cycloalkenyl esters of acrylic, methacrylic, maleic (mono- and diesters), fumaric (mono- and di-esters), and itaconic (mono- and di-esters) acids; vinyl ethers and thioethers of cycloalkenols and cycloalkene thiols; vinyl esters of cycloalkene carboxylic acids; 1,3-butadiene, isoprene, and other conjugated dienes; para-methyl styrene; chloromethylstyrene; allyl-, methallyl-, vinyl-, and crotyl- mercaptan; bromotrichloromethane; bromoform; carbon tetrachloride; and/or in carbon tetrabromide.

12. A process of Claim 11 wherein said polyfunctional compound has at least two sites of unsaturation of unequal reactivity and is present at a level of from 0.1 to 30% by weight of said core.

13. A process of Claim 12 wherein the polyfunctional compound is allyl acrylate or allyl methacrylate and comprises 1 to 10% by weight of said core.

14. A process of Claim 11 wherein said polyfunctional compound is butadiene or isoprene and is present at a level of from 1.0 to 100% by weight of said core.

15. A process of Claim 10 wherein said polyfunctional compound is added after emulsion polymerization of said core, allowed to soak into said core and polymerized, followed by emulsion polymerization and grafting of said shell to said core, said polyfunctional compound being present at a level of about 5 to about 30% by weight of said core and preferably said polyfunctional compound is selected from the group consisting of allyl-, methallyl-, vinyl-, and crotyl-esters of acrylic, methacrylic, maleic (mono- and di-esters) and itaconic (mono- and di-esters) acids; allyl-, methallyl-, and crotyl-vinyl ether and thioether; N-and N,N-di-allyl-, methallyl-, crotyl-, and vinyl-amides of acrylic acid and methacrylic acid; N-allyl-, methallyl, and crotyl-maleimide; vinyl esters of 3-butenoic and 4-pentenoic acids; diallyl phthalate; triallyl cyanurate; O-allyl-, methallyl, crotyl-, O-alkyl, aryl-, P-vinyl-, P-allyl-, P-crotyl-, and P-methallyl-phosphonates; triallyl-, trimethallyl, and tricrotyl-phosphates; O-vinyl, O,O-diallyl-, dimethallyl-, and dicrotyl- phosphates; cycloalkenyl esters of acrylic, methacrylic, maleic (mono- and di-esters), fumaric (mono- and di-esters), and itaconic (mono- and di-esters) acids; vinyl ethers and thioethers of cycloalkenols and cycloalkene thiols; vinyl esters of cycloalkene carboxylic acids; 1,3-butadiene, isoprene and the other conjugated dienes; ethyleneglycol dimethacrylate, diethyleneglycol dimethacrylate, triethyleneglycol dimethacrylate, polyethylene glycol dimethacrylate, polypropyleneglycol dimethacrylate, neopentylglycol dimethacrylate, 1,3-butyleneglycol diacrylate, neopentylglycol diacrylate, trimethylolethane trimethacrylate, dipentaerythritol triacrylate, dipentaerythritol tetraacrylate, dipentaerythritol pentaacrylate, 1,3-butylene glycol dimethacrylate, trimethylolpropane trimethacrylate, trimethylol propane triacrylate, tripropylene glycol diacrylate, and/or divinyl benzene.

16. A process of Claim 10 wherein said polyfunctional compound is present during the emulsion polymerization of said shell, followed by emulsion polymerization and grafting of said core to said shell, said polyfunctional compound being present at a level of from 2 to 30% by weight of said shell, and preferably said polyfuncational compound is selected from the group consisting of allyl-, methallyl, vinyl-, and crotyl-esters of acrylic, methacrylic, maleic (mono- and di-esters), fumaric (mono- and di-esters) and itaconic (mono- and di-esters) acids; allyl-, methallyl-, and crotyl-vinyl ether and thioether; N- and N,N-di-allyl-, methallyl-, crotyl-, and vinyl-amides of acrylic acid and methacrylic acid; N-allyl-, methallyl-, and crotyl-maleimide; vinyl esters of 3-butenoic and 4-pentenoic acids; diallyl phthalate; triallyl cyanurate; O-allyl-, methallyl-, crotyl-, O-alkyl-, aryl-, P-vinyl-, P-allyl-, P-crotyl-, and P-methallyl-phosphonates; triallyl-, trimethallyl-, and tricrotyl-phosphates; O-vinyl-, O,O,-diallyl-, dimethallyl-, and dicrotyl- phosphates; cycloalkenyl esters of acrylic, methacrylic, maleic (mono- and di-esters, fumaric (mono- and di-esters), and itaconic (mono- and di-esters) acids; vinyl ethers and thioethers of cycloalkenols and cycloalkene thiols; vinyl esters of cycloalkene carboxylic acids; 1,3-butadiene, isoprene and other conjugated dienes; para-methylstyrene; styrene; chloromethylstyrene; allyl-, methallyl-, crotyl- and vinyl- mercaptan; and bromotrichloromethane, bromoform, carbon tetrabromide, and/or carbon tetrachloride.

17. A polymer blend of alkali soluble polymer and alkali insoluble polymer wherein the alkali soluble polymer and the alkali insoluble polymer are derived from the same initial polymer particle
wherein the blend is obtainable by a process comprising adding alkali to an initial core-shell polymer particle having an alkali-insoluble, emulsion polymer core and an alkali-soluble, emulsion polymer shell attached to or associated with the core; wherein the alkali neutralises and substantially, but not totally, dissolves the shell polymer such that a portion (i.e. less than 50%) of the shell remains attached to or associated with the core thereby forming a blend of neutralised core-shell polymer and an aqueous solution of neutralised shell polymer;
wherein the weight ratio of core polymer to shell polymer is from 85:15 to 15:85;
wherein each of the core and shell is independently sequentially polymerized by emulsion polymerization from monomer systems comprising a monomer selected from methyl acrylate, ethyl acrylate, butyl acrylate, 2-ethylhexyl acrylate, decyl acrylate, methyl methacrylate, ethyl methacrylate, butyl methacrylate, hydroxethyl methacrylate, hydroxy propyl methacrylate, acrylonitrile, acrylic acid, methacrylic anhydride, maleic anhydride, itaconic anhydride, fumaric anhydride, stryene, substituted stryene, vinyl acetate, and other C₁ to C₁₂ alkyl or hydroxy alkyl acrylates and methacrylates;
wherein the initial core is derived from less than 10% by weight acid-containing unsaturated monomer units;
wherein the initial shell is derived from 10 to 60% by weight of acid-containing unsaturated monomer units; and
wherein from 0.8 to 1.5 equivalents of alkali per equivalent of acid in the initial shell polymer are added.

## Patentansprüche

1. Verfahren zur Herstellung einer Polymermischung, welches Verfahren ein Zugeben eines Alkalis zu einem Kern/Hülle-Ausgangspolymerteilchen umfaßt, welches einen alkaliunlöslichen Emulsionspolymerkern und eine alkalilösliche Emulsionspolymerhülle aufweist, die an den Kern angebracht oder mit dem Kern verbunden ist;
wobei das Alkali das Hülle-Polymer neutralisiert und im wesentlichen, aber nicht vollständig, auflöst, so daß ein Teil der Hülle (d.h. weniger als 50%) an den Kern angebracht oder mit dem Kern verbunden bleibt,
wodurch eine Mischung aus einem neutralisierten Kern/Hülle-Polymer und einer wäßrigen Lösung eines neutralisierten Hülle-Polymers gebildet wird;
wobei das Gewichtsverhältnis des Kern-Polymers zum Hülle-Polymer von 85 : 15 bis 15 : 85 ist;
wobei sowohl der Kern als auch die Hülle voneinander unabhängig durch Emulsionspolymerisation aus Monomersystemen sequentiell polymerisiert werden, welche ein Monomer umfassen, welches ausgewählt ist aus; Methylacrylat, Ethylacrylat, Butylacrylat, 2-Ethylhexylacrylat, Decylacrylat, Methylmethacrylat, Ethylmethacrylat, Butylmethacrylat, Hydroxyethylmethacrylat, Hydroxypropylmethacrylat, Acrylnitril, Acrylsäure, Methacrylsäureanhydrid, Maleinsäureanhydrid, Itaconsäureanhydrid, Fumarsäureanhydrid, Styrol, substituiertes Styrol, Vinylacetat und andere C₁-bis C₁₂-Alkyl- oder Hydroxyalkylacrylate und -methacrylate;
wobei der Kern weniger als 10 Gew.-% Säure-enthaltende ungesättigte Monomereinheiten enthält;
wobei die Hülle von 10 bis 60 Gew.-% Säure-enthaltende ungesättigte Monomereinheiten enthält; und
wobei von 0,8 bis 1,5 Äquivalente Alkali pro Äquivalent Säure im Hülle-Polymer zugegeben werden.

2. Verfahren nach Anspruch 1, wobei das Gewichtsmittel des Molekulargewichts des mittels Gelpermeationschromatographie bestimmten Hülle-Polymers 5.000 bis 100.000 und des Kern-Polymers größer als 8.000 ist.

3. Verfahren nach Anspruch 1 oder 2, wobei die T_{g} des Kern-Polymers etwa - 65° bis 100°C ist.

4. Verfahren nach einem der vorhergehenden Ansprüche, wobei zuerst das Kern-Polymer auf eine Teilchengröße von 60 bis 140 nm polymerisiert wird.

5. Verfahren nach Anspruch 1, wobei das Kern-Polymer als zweites polymerisiert wird und es aufgrund der Hydrophobie des Kern-Polymers ein Bereich innerhalb der Teilchen des alkalilöslichen Hülle-Polymers wird.

6. Verfahren nach einem der vorhergehenden Ansprüche, wobei das Hülle-Polymer eine T_{g} von mindestens 100°C besitzt.

7. Verfahren nach einem der vorhergehenden Ansprüche, wobei die Hülle aus einem Monomergemisch polymerisiert wird, welches 20 bis 50% Methacrylsäure enthält, und wobei der Kern aus einein Monomergemisch polymerisiert wird, welches 0,01% bis etwa 1,5% Methacrylsäure enthält.

8. Verfahren nach einem der vorhergehenden Ansprüche, wobei die Base aus der Gruppe von Ammoniak, Triethylamin, Monomethanolamin, Dimethylaminoethanol, Natriumhydroxid und Kaliumhydroxid gewählt ist.

9. Verfahren nach einem der vorhergehenden Ansprüche, wobei der Kern und die Hülle im wesentlichen chemisch miteinander gepfropft worden sind.

10. Verfahren nach Anspruch 9, wobei der Kern und die Hülle unter Verwendung einer oder mehrerer polyfunktioneller Verbindungen chemisch miteinander gepropft werden, die ausgewählt sind aus:
a) polyfunktionellen Verbindungen mit zwei oder mehreren ungesättigten Stellen,
b) reaktiven Kettenübertragungsmitteln mit zwei oder mehreren entfernbaren Atomen, und
c) polyfunktionellen Hybridverbindungen mit einem oder mehreren entfernbaren Atomen und einer oder mehreren ungesättigten Stellen.

11. Verfahren nach Anspruch 10, wobei die polyfunktionelle Verbindung während der Emulsionspolymerisation des Kerns anwesend ist, gefolgt von einer Emulsionspolymerisation und einem Pfropfen der Hülle auf den Kern, und wobei die polyfunktionelle Verbindung vorzugsweise aus der Gruppe gewählt ist, welche besteht aus: Allyl-, Methallyl-, Vinyl- und Crotylester der Acryl-, Methacryl-, Malein(Mono- und Di-Ester)-, Fumar(Mono- und Di-Ester)-und Itacon(Mono- und Di-Ester)säure; Allyl-, Methallyl- und Crotylvinylether und -thioether, N- und N,N-Diallyl-, Methallyl-, Crotyl- und Vinylamide der Acrylsäure und der Methacrylsäure; N-Allyl-, Methallyl- und Crotylmaleinimid; Vinylester der 3-Buten- und 4-Pentensäure, Diallylphthalat; Triallylcyanurat; O-Allyl-, Methallyl-, Crotyl-, O-Alkyl-, Aryl-, P-Vinyl-, P-Allyl-, P-Crotyl-und P-Methallylphosphonate; Triallyl-, Trimethallyl- und Tricrotylphosphate; O-Vinyl-, O,O-Diallyl-, Dimethallyl- und Dicrotylphosphate; Cycloalkenylester der Acryl-, Methacryl-, Malein(Mono-und Di-Ester)-, Fumar(Mono- und Di-Ester)- und Itacon(Mono- und Di-Ester)säure; Vinylether und Thioether von Cycloalkenolen und Cycloalkenthiolen; Vinylester von Cycloalkencarbonsäuren; 1,3-Butadien, Isopren und andere konjugierte Diene; para-Methylstyrol; Chlormethylstyrol; Allyl-, Methallyl-, Vinyl- und Crotylmercaptan; Bromtrichlormethan; Bromoform`; Tetrachlorkohlenstoff; und/oder Tetrabromkohlenstoff.

12. Verfahren nach Anspruch 11, wobei die polyfunktionelle Verbindung mindestens zwei ungesättigte Stellen mit ungleicher Reaktivität aufweist und zu einem Pegel von 0,1 bis 30 Gew.-% des Kerns vorhanden ist.

13. Verfahren nach Anspruch 12, wobei die polyfunktionelle Verbindung Allylacrylat oder Allylmethacrylat ist und 1 bis 10 Gew.-% des Kerns umfaßt.

14. Verfahren nach Anspruch 11, wobei die polyfunktionelle Verbindung Butadien oder Isopren ist und zu einem Pegel von 1,0 bis 100 Gew-% des Kerns vorhanden ist.

15. Verfahren nach Anspruch 10, wobei die polyfunktionelle Verbindung nach Emulsionspolymerisation des Kerns zugegeben, in den Kern einsaugen gelassen und polymerisiert wird, gefolgt von einer Emulsionspolymerisation und von einem Pfropfen der Hülle auf den Kern, welche polyfunktionelle Verbindung in einem Pegel von etwa 5 bis etwa 30 Gew.-% des Kerns vorhanden ist und die polyfunktionelle Verbindung vorzugsweise aus der Gruppe gewählt ist, welche besteht aus; Allyl-, Methallyl-, Vinyl- und Crotylester der Acryl-, Methacryl-, Malein(Mono-und Di-Ester)- und Itacon(Mono- und Di-Ester)säure; Allyl-, Methallyl- und Crotylvinylether und - thioether; N- und N,N-Diallyl-, Methallyl-, Crotyl- und Vinylamide der Acrylsäure und der Methacrylsäure; N-Allyl-, Methallyl- und Crotylmaleinimid; Vinylester der 3-Buten- und 4-Pentensäure; Diallylphthalat; Triallylcyanurat; O-Allyl-, Methallyl-, Crotyl-, O-Alkyl-, Aryl-, P-Vinyl-, P-Allyl, P-Crotyl- und P-Methallylphosphonate; Triallyl-, Trimethallyl- und Tricrotylphosphate; O-Vinyl-, O,O-Diallyl-, Dimethallyl- und Dicrotylphosphate; Cycloalkenylester der Acryl-, Methacryl-, Malein(Mono- und Di-Ester)-, Fumar(Mono- und Di-Ester)- und Itacon(Mono- und Di-Ester)säure; Vinylether und Thioether von Cycloalkenolen und Cycloalkenthiolen; Vinylester von Cycloalkencarbonsäuren; 1,3-Butadien, Isopren und andere konjugierte Diene; Ethylenglycoldimethacrylat, Diethylenglycoldimethacrylat, Triethylenglycoldimethacrylat, Polyethylenglycoldimethacrylat, Polypropylenglycoldimethacrylat, Neopentylglycoldimethacrylat, 1,3-Butylenglycoldiacrylat, Neopentylglycoldiacrylat, Trimethylolethantrimethacrylat, Dipentaerythritoltriacrylat, Dipentaerythritoltetraacrylat, Dipentaerythritolpentaacrylat, 1,3-Butylenglycoldimethacrylat, Trimethylolpropantrimethacrylat, Trimethylolpropantriacrylat, Tripropylenglycoldiacrylat, und/oder Divinylbenzol.

16. Verfahren nach Anspruch 10, wobei die polyfunkionelle Verbindung während der Emulsionspolymerisation der Hülle anwesend ist, gefolgt von einer Emulsionspolymerisation und einem Pfropfen des Kerns auf die Hülle, und wobei die polyfunktionelle Verbindung in einem Pegel von 2 bis 30 Gew.-% der Hülle vorhanden ist, und wobei die polyfunktionelle Verbindung vorzugsweise aus der Gruppe gewählt ist, welche besteht aus: Allyl-, Methallyl-, Vinyl- und Crotylester der Acryl-, Methacryl-, Malein(Mono- und Di-Ester)-, Fumar(Mono- und Di-Ester)-und Itacon(Mono- und Di-Ester)säure; Allyl-, Methallyl- und Crotylvinylether und -thioether; N- und N,N-Diallyl-, Methallyl-, Crotyl- und Vinylamide der Acrylsäure und der Methacrylsäure; N-Allyl-, Methallyl- und Crotylmaleinimid; Vinylester der 3-Buten- und 4-Pentensäure; Diallylphthalat; Triallylcyanurat; O-Allyl-, Methallyl-, Crotyl-, O-Alkyl-, Aryl-, P-Vinyl-, P-Allyl-, P-Crotyl-und P-Methallylphosphonate; Triallyl-, Trimethallyl- und Tricrotylphosphate; O-Vinyl-, O,O-Diallyl-, Dimethallyl- und Dicrotylphosphate, Cycloalkenylester der Acryl-, Methacryl-, Malein(Mono-und Di-Ester)-, Fumar(Mono- und Di-Ester)- und Itacon(Mono- und Di-Ester)säure; Vinylether und Thioether von Cycloalkenolen und Cycloalkenthiolen; Vinylester von Cycloalkencarbonsäuren; 1,3-Butadien, Isopren und andere konjugierte Diene; para-Methylstyrol; Styrol; Chlormethylstyrol; Allyl-, Methallyl-, Crotyl- und Vinylmercaptan; und Bromtrichormethan; Bromoform; Tetrabromkohlenstoff; und/oder Tetrachlorkohlenstoff.

17. Polymermischung aus einem alkalilöslichen Polymer und einem alkalilunöslichen Polymer, wobei das alkalilösliche Polymer und das alkaliunlösliche Polymer vom gleichen Ausgangspolymerteilchen abgeleitet sind,
wobei die Mischung mit einem Verfahren erhältlich ist, welches ein Zugeben eines Alkalis zu einem Kern/Hülle-Ausgangspolymerteilchen umfaßt, welches einen alkaliunlöslichen Emulsionspolymerkern und eine alkalilösliche Emulsionpolymerhülle aufweist, die an den Kern angebracht oder mit dem Kern verbunden ist; wobei das Alkali das Hülle-Polymer neutralisiert und im wesentlichen, aber nicht vollständig, auflöst, so daß ein Teil der Hülle (d.h. weniger als 50%) an den Kern angebracht oder mit dem Kern verbunden bleibt, wodurch eine Mischung aus einem neutralisierten Kern/Hülle-Polymer und einer wäßrigen Lösung eines neutralisierten Hülle-Polymers gebildet wird;
wobei das Gewichtsverhältnis des Kern-Polymers zum Hülle-Polymer von 85 : 15 bis 15 : 85 ist;
wobei sowohl der Kern als auch die Hülle voneinander unabhängig durch Emulsionspolymerisation aus Monomersystemen sequentiell polymerisiert werden, welche ein Monomer umfassen, welches ausgewählt ist aus: Methylacrylat, Ethylacrylat, Butylacrylat, 2-Ethylhexylacrylat, Decylacrylat, Methylmethacrylat, Ethylmethacrylat, Butylmethacrylat, Hydroxethymethacrylat, Hydroxypropylmethacrylat, Acrylnitril, Acrylsäure, Methacrylsäureanhydrid, Maleinsäureanhydrid, Itaconsäureanhydrid, Fumarsäureanhydrid, Styrol, substituiertes Styrol, Vinylacetat und andere C₁-bis C₁₂-Alkyl- oder Hydroxyalkylacrylate und -methacrylate;
wobei der Ausgangskern von weniger als 10 Gew.-% Säure-enthaltenden ungesättigten Monomereinheiten abgeleitet ist;
wobei die Ausgangshülle von 10 bis 60 Gew.-% Säure-enthaltenden ungesättigten Monomereinheiten abgeleitet ist, und
wobei von 0,8 bis 1,5 Äquivalente Alkali pro Äquivalent Säure im Hülle-Polymer zugegeben werden.

## Revendications

1. Procédé pour préparer un mélange de polymères, ce procédé consistant :
à ajouter un alcali à une particule polymère initiale de type coeur-enveloppe comportant un coeur constitué d'un polymère en émulsion, insoluble dans les alcalis, et une enveloppe, constituée d'un polymère en émulsion, soluble dans les alcalis, fixée ou associée au coeur ;
dans lequel l'alcali neutralise et dissous presque complètement mais non totalement le polymère d'enveloppe de telle sorte qu'une partie de l'enveloppe (c'est-à-dire moins de 50 %) reste fixée ou associée au coeur,
de façon à former un mélange d'un polymère de type coeur-enveloppe neutralisé et d'une solution aqueuse du polymère d'enveloppe neutralisé ;
dans lequel le rapport pondéral du polymère de coeur au polymère d'enveloppe est de 85:15 à 15:85 ;
dans lequel le coeur et l'enveloppe, indépendamment l'un de l'autre, sont soumis à une polymérisation séquentielle par polymérisation en émulsion à partir de systèmes de monomères comprenant des monomères choisis parmi l'acrylate de méthyle, l'acrylate d'éthyle, l'acrylate de butyle, l'acrylate de 2-éthylhexyle, l'acrylate de décyle, le méthacrylate de méthyle, le méthacrylate d'éthyle, le méthacrylate de butyle, le méthacrylate d'hydroxyéthyle, le méthacrylate d'hydroxypropyle, l'acrylonitrile, l'acide acrylique, l'anhydride méthacrylique, l'anhydride maléique, l'anhydride itaconique, l'anhydride fumarique, le styrène, le styrène substitué, l'acétate de vinyle et d'autres acrylates et méthacrylates d'alkyle ou d'hydroxyalkyle en C₁-C₁₂ ;
dans lequel le coeur contient moins de 10 % en poids de motifs monomères insaturés contenant un acide ;
dans lequel l'enveloppe contient de 10 à 60 % en poids de motifs monomères insaturés contenant un acide ; et
dans lequel on ajoute 0,8 à 1,5 équivalents d'alcali par équivalent d'acide dans le polymère d'enveloppe.

2. Procédé selon la revendication 1, dans lequel la masse moléculaire moyenne en masse, telle que déterminée par chromatographie par perméation de gel, est de 5.000 à 100.000 pour le polymère d'enveloppe et est supérieure à 8.000 pour le polymère de coeur.

3. Procédé selon la revendication 1 ou la revendication 2, dans lequel la T_{g} dudit polymère de coeur est d'environ -65 à 100°C.

4. Procédé selon l'une quelconque des revendications précédentes, dans lequel le polymère de coeur est polymérisé en premier, à une granulométrie de 60 à 140 nm.

5. Procédé selon la revendication 1, dans lequel le polymère de coeur est polymérisé en second, et, du fait du caractère hydrophobe du polymère de coeur, devient un domaine au sein des particules du polymère d'enveloppe soluble dans les alcalis.

6. Procédé selon l'une quelconque des revendications précédentes, dans lequel ledit polymère d'enveloppe a une T_{g} d'au moins 100°C.

7. Procédé selon l'une quelconque des revendications précédentes, dans lequel ladite enveloppe est polymérisée à partir d'un mélange de monomères contenant de 20 à 50 % d'acide méthacrylique, et ledit coeur est polymérisé à partir d'un mélange de monomères contenant de 0,01 à environ 1,5 % d'acide méthacrylique.

8. Procédé selon l'une quelconque des revendications précédentes, dans lequel ladite base est choisie parmi l'ensemble comprenant l'ammoniac, la triéthylamine, la monométhanolamine, le diméthylaminoéthanol, l'hydroxyde de sodium et l'hydroxyde de potassium.

9. Procédé selon l'une quelconque des revendications précédentes, dans lequel ledit coeur et ladite enveloppe ont été presque complètement greffés chimiquement ensemble.

10. Procédé selon la revendication 9, dans lequel ledit coeur et ladite enveloppe sont greffés chimiquement ensemble, par utilisation d'un ou plusieurs composés polyfonctionnels choisis parmi les composés suivants :
a) les composés polyfonctionnels ayant au moins deux sites d'insaturation,
b) les agents réactifs de transfert de chaîne ayant au moins deux atomes éliminables, et
c) les composés polyfonctionnels hybrides ayant au moins un atome éliminable et un ou plusieurs sites d'insaturation.

11. Procédé selon la revendication 10, dans lequel ledit composé polyfonctionnel est présent pendant la polymérisation en émulsion dudit coeur, laquelle est suivie d'une polymérisation en émulsion et d'un greffage de ladite enveloppe sur le coeur, ledit compose polyfonctionnel étant de préférence choisi parmi l'ensemble comprenant les esters allyliques, méthallyliques, vinyliques et crotyliques de l'acide acrylique, de l'acide méthacrylique, de l'acide maléique (mono- et diesters), de l'acide fumarique (mono- et diesters) et de l'acide itaconique (mono- et diesters) ; les allyl-, méthallyl- et crotyl-vinyléthers et thioéthers ; les N- et N,N-di-allyl-, méthallyl-, crotyl- et vinyl-amides de l'acide acrylique et de l'acide méthacrylique ; le N-allyl-, le méthallyl- et le crotyl-maléimide ; les esters vinyliques de l'acide 3-buténoïque et de l'acide 4-penténoïque ; le phtalate de diallyle ; le cyanurate de triallyle ; les phosphonates d'O-allyle, de méthallyle, de crotyle, d'O-alkyle, d'aryle, de P-vinyle, de P-allyle, de P-crotyle et de P-méthallyle ; les phosphates de triallyle, de triméthallyle et de tricrotyle ; les phosphates d'O-vinyle, d'O,O-diallyle, de diméthallyle et de dicrotyle ; les esters cycloalcényliques de l'acide acrylique, de l'acide méthacrylique, de l'acide maléique (mono- et diesters), de l'acide fumarique (mono- et diesters) et de l'acide itaconique (mono- et diesters) ; les éthers et thioéthers vinyliques des cycloalcénols et des cycloalcènethiols ; les esters vinyliques des acides cycloalcènecarboxyliques ; le 1,3-butadiène, l'isoprène et d'autres diènes conjugués ; le paraméthylstyrène ; le chlorométhylstyrène ; l'allyl-, le méthallyl-, le vinyl- et le crotyl-mercaptan ; le bromotrichlorométhane ; le bromoforme ; le tétrachlorure de carbone ; et/ou le tétrabromure de carbone.

12. Procédé selon la revendication 11, dans lequel ledit composé polyfonctionnel possède au moins deux sites d'insaturation présentant des réactivités inégales, et est présent en une quantité de 0,1 à 30 % en poids par rapport audit coeur.

13. Procédé selon la revendication 12, dans lequel le composé polyfonctionnel est l'acrylate d'allyle ou le méthacrylate d'allyle et représente de 1 à 10 % en poids dudit coeur.

14. Procédé selon la revendication 11, dans lequel ledit composé polyfonctionnel est le butadiène ou l'isoprène et est présent en une quantité de 1,0 à 100 % en poids par rapport audit coeur.

15. Procédé selon la revendication 10, dans lequel ledit composé polyfonctionnel est ajouté après polymérisation en émulsion dudit coeur, puis on le laisse imprégner ledit coeur et subir une polymérisation, puis une polymérisation en émulsion, ladite enveloppe étant ensuite greffée audit coeur, ce composé polyfonctionnel étant présent en une quantité d'environ 5 à environ 30 % en poids par rapport audit coeur, ledit compose polyfonctionnel étant de préférence choisi parmi l'ensemble comprenant les esters allyliques, méthallyliques, vinyliques et crotyliques de l'acide acrylique, de l'acide méthacrylique, de l'acide maléique (mono- et diesters), et de l'acide itaconique (mono- et diesters) ; les allyl-, méthallyl- et crotyl-vinyléthers et thioéthers ; les N- et N,N-di-allyl-, méthallyl-, crotyl- et vinyl-amides de l'acide acrylique et de l'acide méthacrylique ; le N-allyl-, le méthallyl- et le crotyl-maléimide ; les esters vinyliques de l'acide 3-buténoïque et de l'acide 4-penténoïque ; le phtalate de diallyle ; le cyanurate de triallyle ; les phosphonates d'O-allyle, de méthallyle, de crotyle, d'O-alkyle, d'aryle, de P-vinyle, de P-allyle, de P-crotyle et de P-méthallyle ; les phosphates de triallyle, de triméthallyle et de tricrotyle ; les phosphates d'O-vinyle, d'O,O-diallyle, de diméthallyle et de dicrotyle ; les esters cycloalcényliques de l'acide acrylique, de l'acide méthacrylique, de l'acide maléique (mono- et diesters), de l'acide fumarique (mono- et diesters) et de l'acide itaconique (mono- et diesters) ; les éthers et thioéthers vinyliques des cycloalcénols et des cycloalcènethiols ; les esters vinyliques des acides cycloalcènecarboxyliques ; le 1,3-butadiène, l'isoprène et d'autres diènes conjugués ; le diméthacrylate d'éthylèneglycol, le diméthacrylate de diéthylèneglycol, le diméthacrylate de triéthylèneglycol, le diméthacrylate de polyéthylèneglycol, le diméthacrylate de polypropylèneglycol, le diméthacrylate de néopentylglycol, le diacrylate de 1,3-butylèneglycol, le diacrylate de néopentylglycol, le triméthacrylate de triméthyloléthane, le triacrylate de dipentaérythritol, le tétraacrylate de dipentaérythritol, le pentaacrylate de dipentaérythritol, le diméthacrylate de 1,3-butylèneglycol, le triméthacrylate de triméthylolpropane, le triacrylate de triméthylolpropane, le diacrylate de tripropylèneglycol et/ou le divinylbenzène.

16. Procédé selon la revendication 10, dans lequel ledit composé polyfonctionnel est présent pendant la polymérisation en émulsion de ladite enveloppe, cette opération étant suivie d'une polymérisation en émulsion et d'un greffage dudit coeur à ladite enveloppe, ledit composé polyfonctionnel étant présent en une quantité de 2 à 30 % en poids par rapport à ladite enveloppe, ledit composé polyfonctionnel étant choisi de préférence parmi l'ensemble comprenant les esters allyliques, méthallyliques, vinyliques et crotyliques de l'acide acrylique, de l'acide méthacrylique, de l'acide maléique (mono- et diesters), de l'acide fumarique (mono- et diesters) et de l'acide itaconique (mono- et diesters) ; les allyl-, méthallyl- et crotyl-vinyléthers et thioéthers ; les N- et N,N-di-allyl-, méthallyl-, crotyl- et vinyl-amides de l'acide acrylique et de l'acide méthacrylique ; le N-allyl-, le méthallyl- et le crotyl-maléimide ; les esters vinyliques de l'acide 3-buténoïque et de l'acide 4-penténoïque ; le phtalate de diallyle ; le cyanurate de triallyle ; les phosphonates d'O-allyle, de méthallyle, de crotyle, d'O-alkyle, d'aryle, de P-vinyle, de P-allyle, de P-crotyle et de P-méthallyle ; les phosphates de triallyle, de triméthallyle et de tricrotyle ; les phosphates d'O-vinyle, d'O,O-diallyle, de diméthallyle et de dicrotyle ; les esters cycloalcényliques de l'acide acrylique, de l'acide méthacrylique, de l'acide maléique (mono- et diesters), de l'acide fumarique (mono- et diesters) et de l'acide itaconique (mono- et diesters) ; les éthers et thioéthers vinyliques des cycloalcénols et des cycloalcènethiols ; les esters vinyliques des acides cycloalcènecarboxyliques ; le 1,3-butadiène, l'isoprène et d'autres diènes conjugués ; le paraméthylstyrène ; le styrène ; le chlorométhylstyrène ; l'allyl-, le méthallyl-, le vinyl- et le crotyl-mercaptan ; le bromotrichlorométhane ; le bromoforme ; le tétrachlorure de carbone ; et/ou le tétrabromure de carbone.

17. Mélange de polymères, constitué d'un polymère soluble dans les alcalis et d'un polymère insoluble dans les alcalis, dans lequel le polymère soluble dans les alcalis et le polymère insoluble dans les alcalis sont obtenus à partir de la même particule polymère initiale,
dans lequel on peut obtenir le mélange par un procédé qui consiste à ajouter un alcali à une particule polymère initiale de type coeur-enveloppe ayant un coeur constitué d'un polymère en émulsion, insoluble dans les alcalis, et une enveloppe constituée d'un polymère en émulsion, soluble dans les alcalis, fixée ou associée au coeur ; dans lequel l'alcali neutralise et dissout presque complètement mais non totalement le polymère d'enveloppe de telle sorte qu'une partie de l'enveloppe, (c'est-à-dire inférieure à 50 %), reste fixée ou associée au coeur, de façon à former un mélange d'un polymère de type coeur-enveloppe neutralisé et d'une solution aqueuse d'un polymère d'enveloppe neutralisé ;
dans lequel le rapport pondéral du polymère de coeur au polymère d'enveloppe est de 85:15 à 15:85 ;
dans lequel le coeur et l'enveloppe, indépendamment l'un de l'autre, sont soumis à une polymérisation séquentielle par polymérisation en émulsion à partir de systèmes de monomères comprenant des monomères choisis parmi l'acrylate de méthyle, l'acrylate d'éthyle, l'acrylate de butyle, l'acrylate de 2-éthylhexyle, l'acrylate de décyle, le méthacrylate de méthyle, le méthacrylate d'éthyle, le méthacrylate de butyle, le méthacrylate d'hydroxyéthyle, le méthacrylate d'hydroxypropyle, l'acrylonitrile, l'acide acrylique, l'anhydride méthacrylique, l'anhydride maléique, l'anhydride itaconique, l'anhydride fumarique, le styrène, le styrène substitué, l'acétate de vinyle et d'autres acrylates et méthacrylates d'alkyle ou d'hydroxyalkyle en C₁-C₁₂ ;
dans lequel le coeur initial contient moins de 10 % en poids de motifs monomères insaturés contenant un acide ;
dans lequel ladite enveloppe initiale contient de 10 à 60 % en poids de motifs monomères insaturés contenant un acide ; et
dans lequel on ajoute 0,8 à 1,5 équivalents d'alcali par équivalent d'acide dans le polymère d'enveloppe initiale.
